(19) Europäisches Patentamt
European Patent Office
Office européen des brevets

(11) **EP 4 665 035 A1**

(12) **EUROPEAN PATENT APPLICATION**
published in accordance with Art. 153(4) EPC

(43) Date of publication:
**17.12.2025   Bulletin 2025/51**

(21) Application number: **24784141.4**

(22) Date of filing: **27.03.2024**

(51) International Patent Classification (IPC):
**H04W 72/04** (2023.01)

(52) Cooperative Patent Classification (CPC):
**H04L 1/1812; H04L 5/00; H04W 28/26; H04W 72/04**

(86) International application number:
**PCT/CN2024/084146**

(87) International publication number:
**WO 2024/208056 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **07.04.2023   CN 202310404249**

(71) Applicant: **Huawei Technologies Co., Ltd.**
**Shenzhen, Guangdong 518129 (CN)**

(72) Inventors:
• **XU, Rui**
  **Shenzhen, Guangdong 518129 (CN)**

• **CAO, Youlong**
  **Shenzhen, Guangdong 518129 (CN)**
• **PANG, Xu**
  **Shenzhen, Guangdong 518129 (CN)**
• **QIN, Yi**
  **Shenzhen, Guangdong 518129 (CN)**
• **CHEN, Erkai**
  **Shenzhen, Guangdong 518129 (CN)**

(74) Representative: **Maiwald GmbH**
**Engineering**
**Elisenhof**
**Elisenstrasse 3**
**80335 München (DE)**

(54) **UPLINK CONTROL INFORMATION MAPPING SENDING METHOD, AND COMMUNICATION APPARATUS**

(57)     An uplink control information mapping and sending method and a communication apparatus are provided. The uplink control information mapping and sending method includes: A terminal generates a first bit sequence and a second bit sequence, where the first bit sequence corresponds to first information, the first information is hybrid automatic repeat request HARQ feedback information, the second bit sequence corresponds to second information, and the second information indicates a configured grant CG resource used or unused in a CG periodicity time period. The terminal sends the first information by using a first resource of a physical uplink shared channel PUSCH, where a number of first resources is related to a number of bits included in the second bit sequence. When the UCI bit sequence is transmitted by using this method, the first resource used to transmit the HARQ feedback information is determined based on the number of bits of the second bit sequence. This helps increase a probability of complete transmission of the HARQ feedback information.

Terminal

Access network device

S201: Generate a first bit sequence and a second bit sequence

S202: Send first information by using a first resource of a PUSCH

FIG. 2

**Description**

This application claims priority to Chinese Patent Application No. 202310404249.8, filed with the China National Intellectual Property Administration on April 7, 2023 and entitled "UPLINK CONTROL INFORMATION MAPPING AND SENDING METHOD AND COMMUNICATION APPARATUS", which is incorporated herein by reference in its entirety.

**TECHNICAL FIELD**

This application relates to the field of communication technologies, and in particular, to an uplink control information mapping and sending method and a communication apparatus.

**BACKGROUND**

Uplink control information (uplink control information, UCI) generally includes a plurality of types of information. For example, the UCI includes hybrid automatic repeat request (hybrid automatic repeat request, HARQ) feedback information. The HARQ feedback information indicates whether data is successfully transmitted, ensuring service reliability to some extent.

In an extended reality (extended Reality, XR) service, an uplink data amount is large. Therefore, a terminal performing the XR service may be configured with a plurality of physical uplink shared channel (physical uplink shared channel, PUSCH) transmission resources in each configured grant (configured grant, CG) periodicity time period of a licensed frequency band. However, the uplink data amount of the XR service usually changes dynamically, that is, the uplink data amount may vary between CG periodicity time periods. To improve resource utilization, the terminal performing the XR service may send UCI of a specific type (collectively referred to as second information in the following) to an access network device based on the uplink data amount, to indicate an unused CG PUSCH transmission resource in the CG periodicity time period, so that the access network device can configure a redundant CG PUSCH transmission resource in the CG periodicity to another terminal.

When the resource is limited, when both the HARQ feedback information and the second information are multiplexed on the PUSCH transmission resource, how to increase a probability of complete transmission of the HARQ feedback information is an urgent problem to be resolved.

**SUMMARY**

Embodiments of this application provide an uplink control information mapping and sending method and a communication apparatus. According to the communication method, multiplexing both HARQ feedback information and second information on a PUSCH transmission resource is beneficial for complete mapping of a bit sequence used to carry the HARQ feedback information to a first resource, where the first resource used to transmit the HARQ feedback information is determined based on a number of bits of a second bit sequence, helping increase a probability of complete transmission of the HARQ feedback information, thereby improving service reliability.

According to a first aspect, an embodiment of this application provides a communication method. The method may be performed by a terminal, or may be performed by a module (for example, a processor, a chip, or a chip system) used in the terminal, or may be implemented by a logical node, a logical module, or software that can implement all or some functions of the terminal. In the communication method, a first bit sequence and a second bit sequence are generated, where the first bit sequence corresponds to first information, the first information is hybrid automatic repeat request HARQ feedback information, the second bit sequence corresponds to second information, and the second information indicates a configured grant CG resource used or unused in a CG periodicity time period. The first information is sent by using a first resource of a physical uplink shared channel PUSCH, where a number of first resources is related to a number of bits included in the second bit sequence.

Based on the method described in the first aspect, the number of first resources is determined with reference to the number of bits included in the second bit sequence. Therefore, when the resource is limited, a bit sequence corresponding to the HARQ feedback information may be mapped to the transmission resource, so that a probability of complete transmission of the HARQ feedback information is increased, improving service stability.

In a possible implementation, the second information is sent by using the first resource. When the possible implementation is implemented, the first resource is further used to send the second information. This helps increase a probability of complete transmission of the HARQ feedback information, and further helps increase a probability of complete transmission of the second information.

In a possible implementation, the first bit sequence and the second bit sequence are jointly encoded; or the first bit sequence and the second bit sequence are independently encoded. When the possible implementation is implemented, channel encoding may be more flexibly performed on the first bit sequence and the second bit sequence.

In a possible implementation, if a total length of the first bit sequence and the second bit sequence is less than or equal to N, the first resource is a reserved resource in the PUSCH. When the possible implementation is implemented, the first resource is not occupied by other information through resource reservation, so that a probability of complete transmission of the HARQ feedback information and the second information is increased.

In a possible implementation, a start symbol of the first resource in time domain is a 1st available symbol in the PUSCH after carrying a 1st modulation reference signal DMRS. When the possible implementation is implemented, determining the start symbol of the first resource after the symbol carrying the DMRS helps better demodulate information carried on the first resource.

In a possible implementation, the second information is sent by using a second resource of the PUSCH, where a number of second resources is related to the number of bits included in the second bit sequence. When the possible implementation is implemented, a number of resources used to map the second information may be accurately determined based on the number of bits included in the second bit sequence.

In a possible implementation, if the first bit sequence and the second bit sequence are independently encoded, and the total length of the first bit sequence and the second bit sequence is greater than N, the second information is sent by using the second resource of the PUSCH. When the possible implementation is implemented, when the total length of the first bit sequence and the second bit sequence is large, the second information is no longer sent in a puncturing transmission manner, and the second information is sent in a rate matching transmission manner. This helps improve transmission performance.

In a possible implementation, the start symbol of the second resource in time domain is the 1st available symbol after the symbol carrying the 1st DMRS, or the 1st available symbol in the PUSCH. When the possible implementation is implemented, a location of the second resource may be more flexibly determined.

According to a second aspect, an embodiment of this application provides a communication method. The method may be performed by a terminal, or may be performed by a module (for example, a processor, a chip, or a chip system) used in the terminal, or may be implemented by a logical node, a logical module, or software that can implement all or some functions of the terminal. In the communication method, a third bit sequence and a fourth bit sequence are generated, where the third bit sequence corresponds to third information, the third information is hybrid automatic repeat request HARQ feedback information, the fourth bit sequence corresponds to fourth information, and the fourth information indicates a configured grant CG resource used or unused in a CG periodicity time period. The third information is sent by using a third resource of a physical uplink shared channel PUSCH, where a number of third resources is related to a number of bits included in the third bit sequence. The fourth information is mapped to a fourth resource of the PUSCH other than the third resource, and the fourth information is sent by using the fourth resource.

Based on the method described in the second aspect, the terminal does not map the fourth information to the third resource corresponding to the HARQ feedback information, to avoid a case in which the fourth information is discarded when the HARQ feedback information is preferentially transmitted. This facilitates correct transmission of the fourth information, and helps improve resource utilization.

In a possible implementation, a number of fourth resources is related to a number of bits included in the fourth bit sequence. When the possible implementation is implemented, a number of resources used to map the fourth information may be accurately determined based on the number of bits included in the fourth bit sequence.

In a possible implementation, the number of third resources is related to the number of bits included in the third bit sequence. When the possible implementation is implemented, a number of resources used to map the third information may be accurately determined based on the number of bits included in the third bit sequence.

According to a third aspect, an embodiment of this application provides a communication method. The method may be performed by an access network device, or may be performed by a module (for example, a processor, a chip, or a chip system) used in the access network device, or may be implemented by a logical node, a logical module, or software that can implement all or some functions of the access network device. In the communication method, first information is received by using a first resource of a physical uplink shared channel PUSCH, where a number of first resources is related to a number of bits included in a second bit sequence, the first information is hybrid automatic repeat request HARQ feedback information, the second bit sequence corresponds to second information, and the second information indicates a configured grant CG resource used or unused in a CG periodicity time period.

Based on the method described in the third aspect, the number of first resources is determined with reference to the number of bits included in the second bit sequence. Therefore, when the resource is limited, a bit sequence corresponding to the HARQ feedback information may be mapped to the transmission resource, so that a probability of complete transmission of the HARQ feedback information is increased, improving service stability.

In a possible implementation, the second information is further received by using the first resource.

In a possible implementation, the first information corresponds to a first bit sequence, and the first bit sequence and the second bit sequence are jointly encoded; or the first bit sequence and the second bit sequence are independently encoded.

In a possible implementation, if a total length of the first bit sequence and the second bit sequence is less than or equal to N, the first resource is a reserved resource in the PUSCH.

In a possible implementation, a start symbol of the first resource in time domain is a 1st available symbol in the PUSCH after carrying a 1st modulation reference signal DMRS.

In a possible implementation, the second information is received by using a second resource of the PUSCH, where a number of second resources is related to the number of bits included in the second bit sequence.

In a possible implementation, if the first bit sequence and the second bit sequence are independently encoded, and the total length of the first bit sequence and the second bit sequence is greater than N, the second information is sent by using the second resource of the PUSCH.

In a possible implementation, the start symbol of the second resource in time domain is the 1st available symbol after the symbol carrying the 1st DMRS, or the 1st available symbol in the PUSCH.

For beneficial effects obtained based on any one of the possible implementations of the third aspect, refer to descriptions of beneficial effects of the possible implementations of the first aspect.

According to a fourth aspect, this application provides a communication apparatus. For example, the communication apparatus may be a terminal or a module, for example, a processor, a chip, or a chip system, used in the terminal, or may be a logical node, a logical module, or software that can implement all or some functions of the terminal. The communication apparatus includes modules/units configured to perform the method according to any one of the first aspect and the possible implementations of the first aspect.

According to a fifth aspect, this application provides a communication apparatus. For example, the communication apparatus may be a terminal or a module, for example, a processor, a chip, or a chip system, used in the terminal, or may be a logical node, a logical module, or software that can implement all or some functions of the terminal. The communication apparatus includes modules/units configured to perform the method according to any one of the second aspect and the possible implementations of the second aspect.

According to a sixth aspect, this application provides a communication apparatus. For example, the communication apparatus may be an access network device or a module, for example, a processor, a chip, or a chip system, used in the access network device, or may be a logical node, a logical module, or software that can implement all or some functions of the access network device. The communication apparatus includes modules/units configured to perform the method according to any one of the third aspect and the possible implementations of the third aspect.

According to a seventh aspect, this application provides a communication apparatus. The apparatus may be a terminal, or may be a module, for example, a chip, a chip system, or a processor, used in the terminal, or may be a logical node, a logical module, or software that can implement all or some functions of the terminal. The communication apparatus may alternatively be a chip system. The communication apparatus may perform the method according to the first aspect, or the communication apparatus may perform the method according to the second aspect. A function of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effects thereof, refer to the method according to the first aspect or the second aspect, and the beneficial effects thereof. Repeated content is not described again.

According to an eighth aspect, this application provides a communication apparatus. The apparatus may be an access network device, or may be a module, for example, a chip, a chip system, or a processor, used in the access network device, or may be a logical node, a logical module, or software that can implement all or some functions of the access network device. The communication apparatus may alternatively be a chip system. The communication apparatus may perform the method according to the third aspect. A function of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effects thereof, refer to the method according to the third aspect and the beneficial effects thereof. Repeated content is not described again.

According to a ninth aspect, this application provides a computer-readable storage medium. The computer-readable storage medium is configured to store computer-executable instructions. When the computer-executable instructions are executed, the method performed by the terminal in the method according to the first aspect is implemented; or the method performed by the terminal in the method according to the second aspect is implemented; or the method performed by the access network device in the method according to the third aspect is implemented.

According to a tenth aspect, this application provides a computer program product including a computer program. When the computer program is executed, the method performed by the terminal in the method according to the first aspect is implemented; or the method performed by the terminal in the method according to the second aspect is implemented; or the method performed by the access network device in the method according to the third aspect is implemented.

According to an eleventh aspect, this application provides a communication system. The communication system includes a communication apparatus (for example, a terminal) configured to perform the method according to the first aspect and a communication apparatus (for example, an access network device) configured to perform the method according to the third aspect, or the communication system includes a communication apparatus (for example, a terminal) configured to perform the method according to the second aspect.

**BRIEF DESCRIPTION OF DRAWINGS**

FIG. 1 is a diagram of a system architecture according to this application;

FIG. 2 is a schematic flowchart of a communication method according to this application;

FIG. 3 is a diagram of a mapping procedure according to this application;

FIG. 4a(1) to FIG. 4b(4) are diagrams of two mapping rules according to this application;

FIG. 5 is a diagram of another mapping procedure according to this application;

FIG. 6a(1) to FIG. 6c(5) are diagrams of three mapping rules according to this application;

FIG. 7 is a schematic flowchart of another communication method according to this application;

FIG. 8 is a diagram of still another mapping procedure according to this application;

FIG. 9(1) to FIG. 9(6) are a diagram of a mapping rule according to this application;

FIG. 10 is a diagram of still another mapping procedure according to this application;

FIG. 11(1) to FIG. 11(6) are a diagram of a mapping rule according to this application;

FIG. 12 is a diagram of a structure of a communication apparatus according to this application; and

FIG. 13 is a diagram of a structure of another communication apparatus according to this application.

**DESCRIPTION OF EMBODIMENTS**

The following further describes specific embodiments of this application in detail with reference to the accompanying drawings.

In this specification, the claims, and the accompanying drawings of this application, the terms "first", "second", and the like are intended to distinguish between different objects, but not to describe a specific order. In addition, the terms "include", "have", and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that particular features, structures, or characteristics described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this specification may be combined with another embodiment.

In this application, "at least one (item)" means one or more, "a plurality of" means two or more, "at least two (items)" means two, three, or more, and "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In this application, "sending information to ... (for example, a terminal)" or related illustration in the accompanying drawings may be understood as that a destination end of the information is the terminal, and may include directly or indirectly sending information to the terminal. "Receiving information from ... (for example, a terminal)" or "receiving information that is from ... (for example, a terminal)" or related illustration in the accompanying drawings may be understood as that a source end of the information is the terminal, and may include directly or indirectly receiving information from the terminal. Information may undergo necessary processing between the source for sending the information and the destination, for example, a format change. However, the destination may understand valid information from the source. Similar descriptions in this application may be understood similarly, and details are not described herein.

To better understand embodiments of this application, the following first describes a system architecture in embodiments of this application.

Embodiments of this application may be applied to a wireless communication system such as a communication system that is evolved after 5G, for example, a long term evolution (long term evolution, LTE) system, a 5th generation mobile communication (5th generation mobile communication, 5G) system, or a 6th generation mobile communication (6th generation mobile communication, 6G) system, a satellite communication system, or a short-range communication system. The wireless communication system mentioned in embodiments of this application includes but is not limited to three application scenarios of a 5G/6G mobile communication system: enhanced mobile broadband (enhanced mobile broadband, eMBB), ultra-reliable and low-latency communication (ultra-reliable low-latency communication, URLLC), massive machine-type communications (massive machine-type of communications, mMTC), a long-range internet of things (long range, LoRa) system, or an internet of vehicles system. The wireless communication system may include one or more access network devices and one or more terminal devices.

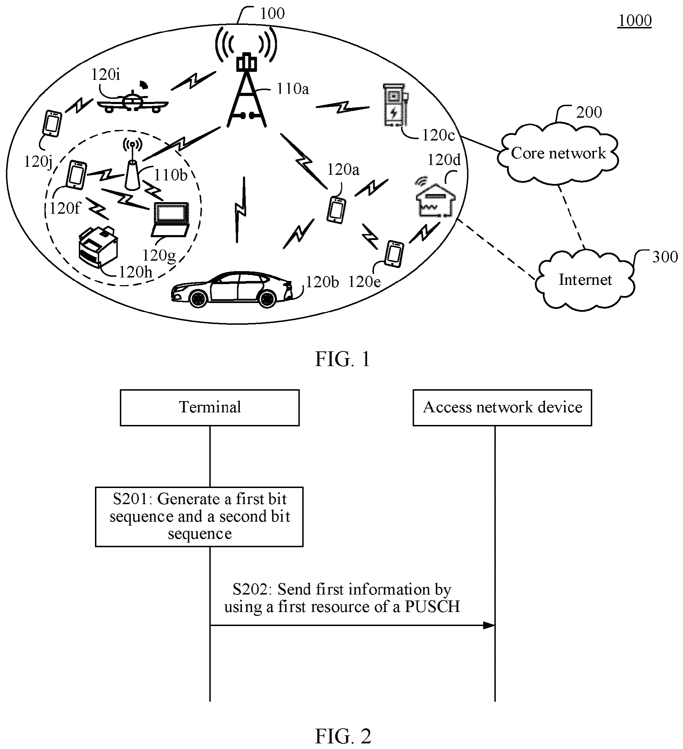

The following uses a system architecture shown in FIG. 1 as an example for description. As shown in FIG. 1, the communication system 1000 includes a radio access network (radio access network, RAN) 100 and a core network (core network, CN) 200. The RAN 100 includes at least one access network device (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 may be connected to the access network device 110 in a wireless manner. The access network device 110 is connected to the core network 200 in a wireless or wired manner. A core network device in the core network 200 and the access network device 110 in the RAN 100 may be different physical devices, or may be a same physical device that integrates a logical function of the core network and a logical function of the radio access network.

It should be noted that the RAN 100 may be a cellular system related to the 3rd generation partnership project (3rd generation partnership project, 3GPP), for example, a 4G mobile communication system, a 5G mobile communication system, or an evolved system after 5G (for example, a 6G mobile communication system). The RAN 100 may alternatively be an open access network (open RAN, O-RAN, or ORAN), a cloud radio access network (cloud radio access network, CRAN), or the like. The RAN 100 may alternatively be a communication system that integrates the foregoing two or more systems. It should be noted that numbers of access network devices and terminal devices in FIG. 1 are merely examples, and should not be considered as a specific limitation on this application. The following describes in detail a terminal device and a network device that are related to the system architecture.

1. Terminal device

The terminal device may also be referred to as user equipment (user equipment, UE), a mobile station (mobile station, MS), a mobile terminal (mobile terminal, MT), or the like, or is a device that is configured to provide voice or data connectivity for a user, or may be an internet of things device. For example, the terminal device includes a handheld device, a vehicle-mounted device, or the like that has a wireless connection function. Currently, the terminal device may be: a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed railway), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication.

A device form of the terminal is not limited in embodiments of this application. An apparatus configured to implement a function of the terminal device may be a terminal device, or may be an apparatus that can support the terminal device in implementing the function, for example, a chip system. The apparatus may be mounted in the terminal device or used in cooperation with the terminal device. In embodiments of this application, the chip system may include a chip, or may include a chip and another discrete component.

2. Access network device

The access network device is a node in a radio access network (radio access network, RAN), and may also be referred to as a network device, or may also be referred to as a RAN node (or a device). The access network device is configured to help the terminal implement radio access. A plurality of access network devices 110 in the communication system 1000 may be nodes of a same type, or may be nodes of different types. In some scenarios, roles of the access network device 110 and the terminal 120 are relative. For example, the network element 120i in FIG. 1 may be a helicopter or an uncrewed aerial vehicle, and may be configured as a mobile base station. For the terminal 120j that accesses the RAN 100 by using the network element 120i, the network element 120i is a base station. However, for the base station 110a, the network element 120i is a terminal. The access network device 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the access network device may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6th generation (6th generation, 6G) mobile communication system, a base station in a future mobile communication system, a satellite, an integrated access and backhaul (integrated access and backhaul, IAB) node, or an access network device in a mobile switching center-based non-terrestrial communication network (non-terrestrial network, NTN) communication system, that is, the access network device may be deployed on a high-altitude platform, a satellite, or the like. The access network device may be a macro base station (for example, 110a in FIG. 1), a micro base station or an indoor station (for example, 110b in FIG. 1), a relay node or a donor node, or a radio controller in a CRAN scenario. The access network device may alternatively be a device that undertakes a function of the base station in device-to-device (device-to-device, D2D) communication, internet of vehicles communication, uncrewed aerial vehicle communication, or machine-to-machine communication. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

All or some functions of the access network device in this application may alternatively be implemented by using a software function running on hardware, or may be implemented by using an instantiated virtualization function on a platform (for example, a cloud platform). The access network device in this application may alternatively be a logical node, a logical module, or software that can implement all or some functions of the access network device.

In another possible scenario, a plurality of access network devices cooperate to assist the terminal in implementing radio access, and different access network devices respectively implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that, the access network device may be a CU node, a DU node, or a device including the CU node and the DU node. In addition, the CU may be classified into an access network device in the access network RAN, or the CU may be classified into an access network device in the core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the access network device is not limited. An apparatus configured to implement a function of the access network device may be an access network device, or may be an apparatus that can support the access network device in implementing the function, for example, a chip system. The apparatus may be mounted in the access network device or used with the access network device.

For ease of understanding of content of this solution, the following further explains and describes some terms in embodiments of this application, so as to facilitate understanding by a person skilled in the art. This part is merely for ease of understanding, and cannot be considered as a disclosure or specific limitation on the technical solutions of this application.

1. Extended reality (extended reality, XR)

The XR means that reality and virtuality are combined through computers to create a virtual environment for human-machine interaction. Generally, XR includes virtual reality (virtual reality, VR) and augmented reality (augmented reality, AR). An XR service generally has the following characteristics: ①A service model (also referred to as a domain model (domain model)) is generally periodically transmitted based on a frame rate. The service model indicates how associated data in service logic is associated and cooperated. ②An amount of transmitted data is large, and an amount of frame data is variable.

2. Configured grant (configured grant, CG)

The CG is a mechanism in which some resources (namely, CG resources mentioned in this application) are preconfigured for the terminal in an uplink. Subsequently, when the terminal has to-be-transmitted uplink data, the terminal no longer needs to send a scheduling request for uplink data transmission to the access network device, and may perform uplink transmission by using the preconfigured PUSCH resource, reducing an uplink transmission delay. Generally, one transport block (transport block, TB) and at least one (one or more) CG resource may be configured in one CG periodicity time period.

It should be noted that duration of one CG periodicity time period is equal to a CG periodicity. The CG resource in the CG periodicity time period mentioned in this application may also be referred to as a PUSCH resource in the CG periodicity time period, a CG uplink resource, a CG PUSCH resource, a CG PUSCH transmission resource, a CG PUSCH transmission occasion, or the like in another solution.

3. Transmission structure

3.1. Time domain structure

In a new radio (new radio, NR) standard, duration of a length of a transmission frame is 10 ms, each frame is divided into 10 subframes, and a length of each subframe is 1 ms. Each subframe is divided into several slots (slot), and each slot includes 14 orthogonal frequency-division multiplexing (orthogonal frequency-division multiplexing, OFDM) symbols. A specific time length of each slot is determined based on a parameter set. For example, when an SCS is 15 kHz, a length of one slot is 1 ms; or when a subcarrier spacing is 30 kHz, a length of one slot is 0.5 ms. It may be understood as that a larger subcarrier spacing indicates shorter duration of the OFDM symbol and a more mini slot. It should be noted that, the OFDM symbol is also referred to as a symbol (symbol) in the following.

3.2. Frequency domain structure

In NR, a resource element (resource element, RE) is defined as a subcarrier on an OFDM symbol, and the RE is a smallest physical unit in an NR standard. 12 consecutive subcarriers in frequency domain are referred to as a resource block (resource block, RB). Although one RB fixedly includes 12 subcarriers, due to different subcarrier spacings, actual bandwidths occupied by different RBs in frequency domain are not necessarily the same.

4. Uplink control information (uplink control information, UCI)

The UCI is used to assist transmission of uplink and downlink data. A UCI type includes configured grant uplink control information (configured grant uplink control information, CG-UCI), a hybrid automatic repeat request acknowledgment (hybrid automatic repeat request acknowledgement, HARQ-ACK), and channel state information (channel state information, CSI).

The HARQ-ACK is also referred to as HARQ feedback information in this application. The HARQ feedback information indicates whether data is successfully received. The HARQ feedback information includes an acknowledgment (acknowledgement, ACK) indicating that data is successfully received, and a negative acknowledgment (negative acknowledgement, NACK) indicating that data fails to be received (or no data is received). Therefore, the HARQ feedback information is related to service stability. The CSI includes a CSI part 1 and a CSI part 2. A payload size of the CSI part 1 is fixed, and is used to determine an information bit of the CSI part 2. Generally, the CSI part 1 is transmitted before the CSI part 2. The CSI may reflect state information of a transmission channel between two communication parties. Processing the transmission channel based on the CSI helps implement high-reliability and low-latency transmission between the two communication parties. Therefore, the CSI is related to service reliability. The CG-UCI includes information (for example, a HARQ process number) indicating a HARQ process, and the HARQ process number facilitates correct transmission and reliable transmission of a service.

When the UCI sent by the terminal to the access network device includes a plurality of pieces of information (or understood as a plurality of types of UCI), each piece of information corresponds to a priority. It should be understood that a UCI bit sequence corresponding to the UCI includes an A bit sequence corresponding to A information and a B bit sequence corresponding to B information. That a priority of the A information is higher than a priority of the B information mentioned in this application may include at least one or more of the following understandings: ①A location of the A bit sequence in the UCI bit sequence is before a location of the B bit sequence. ②A bit index value of a last bit in the A bit sequence in a first UCI bit sequence is less than a bit index value of a 1st bit in the B bit sequence in the first UCI bit sequence. ③When resource mapping is performed on the UCI bit sequence, the A bit sequence is first mapped, and then the B bit sequence is mapped. ④In the first UCI bit sequence, the A bit sequence is before the B bit sequence. ⑤When the UCI bit sequence is transmitted, if a reserved resource (a resource configured for transmitting the A bit sequence) corresponding to the A bit sequence cannot be used for the B bit sequence, it is considered that the A bit sequence is before the B bit sequence.

It should be noted that, the UCI may be transmitted on a physical uplink control channel (physical uplink control channel, PUCCH) or may be transmitted on a PUSCH. The following descriptions in this application are mainly for a case in which the UCI is multiplexed on the PUSCH (that is, the UCI is transmitted by using the PUSCH).

5. Joint encoding and independent encoding

In a possible implementation, the terminal receives a first parameter from the access network device, where the first parameter indicates that the A information and the B information are jointly encoded. The first parameter may be carried in a radio resource control (radio resource control, RRC) signaling message or downlink control information (downlink control information, DCI). Further, the terminal performs joint encoding on the A bit sequence corresponding to the A information and the B bit sequence corresponding to the B information, or it is understood as that the A bit sequence and the B bit sequence are jointly encoded. It should be noted that a manner in which the A information and the B information are configured to be jointly encoded is not specifically limited in this application.

In this application, that the A bit sequence and the B bit sequence are jointly encoded may include at least one or more of the following understandings: ①The A bit sequence and the B bit sequence are consecutive, to be specific, the last bit of the A bit sequence and the 1st bit of the B bit sequence are consecutive (that is, the bit index values are consecutive); or a last bit of the B bit sequence and a 1st bit of the A bit sequence are consecutive. For example, a UCI bit sequence that includes an A bit sequence and a B bit sequence and that is generated by the terminal is $a_0, a_1, ..., a_{O^{HARQ}-1}, a_{O_{HARQ}}, a_{O_{HARQ}+1} \cdots, a_{O_{HARQ}+XR-UCI-1}$, where the A bit sequence includes $O^{HARQ}$ bits (which may also be understood as a number of bits), and the A bit sequence is $a_0, a_1, ..., a_{O_{HARQ}-1}$; and the B bit sequence includes $O^{XR-UCI}$ bits, and the B bit sequence is $a_{O_{HARQ}}, a_{O_{HARQ}+1} \cdots, a_{O_{HARQ}+XR-UCI-1}$. ②When a cyclic redundancy check (cyclic redundancy check, CRC) is added to each bit sequence in the UCI bit sequence that includes the A bit sequence and the B bit sequence, only one CRC is added to the A bit sequence and the B bit sequence. ③A first bit sequence and a second bit sequence are included in one encoded sequence.

In a possible implementation, if the terminal does not receive the first parameter from the access network device, the terminal performs independent encoding on the A bit sequence corresponding to the A information and the B bit sequence corresponding to the B information, or it is understood as that the A bit sequence and the B bit sequence are independently encoded. It should be noted that a manner in which the A information and the B information are configured to be independently encoded is not specifically limited in this application.

In this application, that the A bit sequence and the B bit sequence are independently encoded (that is, are not jointly encoded) may include at least one or more of the following understandings: ①The A bit sequence and the B bit sequence are inconsecutive, to be specific, the last bit of the A bit sequence and the 1st bit of the B bit sequence are inconsecutive (that is, the bit index values are inconsecutive); or a last bit of the B bit sequence and a 1st bit of the A bit sequence are inconsecutive. For example, a UCI bit sequence that includes an A bit sequence and a B bit sequence and that is generated by the terminal is $a_0, a_1, ..., a_{O^{HARQ}-1}, ..., a_0^{(1)}, a_1^{(1)} ..., a_{O^{XR-UCI}-1}^{(1)}$, where the A bit sequence includes $O^{HARQ}$ bits, and the A bit sequence is $a_0, a_1, ..., a_{O_{HARQ}-1}$; and the B bit sequence includes $O^{XR-UCI}$ bits, and the B bit sequence is $a_0^{(1)}, a_1^{(1)} ..., a_{O^{XR-UCI}-1}^{(1)}$. ②When a CRC is added to each bit sequence in the UCI bit sequence that includes the A bit sequence and the B bit sequence, one CRC is added to the A bit sequence, and one CRC is added to the B bit sequence. ③A first bit sequence and a second bit sequence are included in two encoded sequences.

It should be noted that joint encoding and independent encoding mentioned in this application are both a type of channel encoding. A specific encoding scheme used for channel encoding is not specifically limited in this application. For example, channel encoding may be performed by using a polar code (polar code).

This application provides a communication method. When both HARQ feedback information and second information are multiplexed on a PUSCH transmission resource, a first resource used to transmit the HARQ feedback information is determined based on a number of bits of a second bit sequence. This helps increase a probability of complete transmission of the HARQ feedback information when the PUSCH resource is limited, thereby improving service reliability. The following further describes the communication method and a communication apparatus with reference to the accompanying drawings.

It may be understood that in this application, an example in which the access network device and the terminal are used as execution bodies of interaction illustration is used for illustration. However, the execution bodies of the interaction illustration are not limited in this application. For example, the access network device in the method provided in this application may alternatively be a chip, a chip system, or a processor used in the access network device, or may be a logical node, a logical module, or software that can implement all or some functions of the access network devices. The terminal in the method provided in this application may alternatively be a chip, a chip system, or a processor used in the terminal, or may be a logical node, a logical module, or software that can implement all or some functions of the terminal.

FIG. 2 is a schematic flowchart of a communication method according to an embodiment of this application.

S201: A terminal generates a first bit sequence and a second bit sequence. The first bit sequence corresponds to first information, the first information is HARQ feedback information, the second bit sequence corresponds to second information, and the second information indicates a CG resource used or unused in a CG periodicity time period.

The terminal determines that UCI that needs to be sent includes the HARQ feedback information and the second information indicating the CG resource used or unused in the CG periodicity time period. When the UCI is multiplexed on a PUSCH, the terminal generates the first bit sequence of the HARQ feedback information and the second bit sequence corresponding to the second information.

It should be noted that the second information is also referred to as XR-UCI in this application. It may be understood that, in this application, only an example in which a name of the second information is XR-UCI is used. In another solution, the second information may also have another name (for example, CG-skipUCI). The name of the second information is not specifically limited in this application.

S202: The terminal sends the first information by using a first resource of the PUSCH. Correspondingly, an access network device receives the first information by using the first resource of the PUSCH.

After generating the first bit sequence and the second bit sequence, the terminal device determines, with reference to a number of bits included in the second bit sequence, a resource (namely, the first resource mentioned in this application) used to map the first bit sequence, and determines, based on the number of bits included in the second bit sequence, a resource used to map the second bit sequence. The resource used to map the second bit sequence may be the first resource, that is, the terminal subsequently sends the first information and the second information by using the first resource of the PUSCH; or the resource used to map the second bit sequence may be a second resource, that is, the terminal subsequently sends the first information by using the first resource of the PUSCH, and sends the second information by using the second resource of the PUSCH.

A number of first resources is related to the number of bits included in the second bit sequence. It should be noted that, in this application, that the number of first resources is related to the number of bits included in the second bit sequence includes one or more of the following understandings: determining, based on the number of bits included in the second bit sequence, whether to use the first resource to transmit the second information; or when the first resource is used to transmit the first information and the second information, determining the number of first resources based on a number of bits included in the first bit sequence and the number of bits included in the second bit sequence.

The following describes, depending on whether the first bit sequence and the second bit sequence are jointly encoded, a case in which the terminal device sends the first information and the second information by using the resource of the PUSCH.

Case 1: When the first bit sequence and the second bit sequence are jointly encoded, the terminal device sends the first information and the second information by using the first resource of the PUSCH.

In other words, after the terminal generates the first bit sequence corresponding to the first information and the second bit sequence corresponding to the second information, when performing channel encoding on the first bit sequence and the second bit sequence, the terminal performs joint encoding on the first bit sequence and the second bit sequence. Further, the terminal determines, depending on whether a sum of the number of bits included in the first bit sequence (referred to as a first number of bits for short in the following) and the number of bits included in the second bit sequence (referred to as a second number of bits for short in the following) is greater than N, whether to reserve the first resource in the resource of the PUSCH to transmit the first information and the second information. When the sum of the first number of bits and the second number of bits is less than or equal to N, it is determined to reserve the first resource in the resource of the PUSCH to transmit the first information and the second information; or when the sum of the first number of bits and the second number of bits is greater than N, the first bit sequence and the second bit sequence are directly mapped to the first resource of the PUSCH. N is an integer greater than or equal to 0. For example, N may be 2, or N may be 4. In the following descriptions, only that N is 2 is used as an example for description, and cannot be considered as a specific limitation on a value of N in this application.

To be specific, in the case 1, there are the following two execution branches:

In an execution branch 1 in the case 1, the sum of the first number of bits and the second number of bits is less than or equal to N, and the terminal device reserves the first resource in the resource of the PUSCH based on the first number of bits and the second number of bits. After mapping another bit sequence (a bit sequence other than the first bit sequence and the second bit sequence, for example, a bit sequence corresponding to CSI) in a UCI bit sequence to the resource of the PUSCH, the terminal maps the first bit sequence and the second bit sequence to the reserved first resource. It may be understood that, when the terminal maps the first bit sequence and the second bit sequence to the reserved first resource, and finds that the reserved first resource already carries the another bit sequence, the terminal first deletes the another bit sequence carried on the reserved first resource, and then maps the first bit sequence and the second bit sequence to the reserved first resource. A start symbol of the first resource in time domain is a $1^{st}$ available symbol in the PUSCH after carrying a $1^{st}$ modulation reference signal (demodulation reference signal, DMRS).

In an execution branch 2 in the case 1, the sum of the first number of bits and the second number of bits is greater than N, and the terminal device determines the first resource in the resource of the PUSCH based on the first number of bits and the second number of bits. After mapping the first bit sequence and the second bit sequence to the first resource, the terminal maps a bit sequence (for example, a bit sequence corresponding to CSI) whose priority is lower than a priority of the first information and a priority of the second information to another resource (a resource other than the first resource) of the PUSCH.

Case 2: When the first information and the second information are not configured to be jointly encoded (or it is understood as that the first information and the second information are configured to be independently encoded), if a sum of the number of bits included in the first bit sequence and the number of bits included in the second bit sequence is less than or equal to N, the terminal device sends the first information and the second information by using the first resource of the PUSCH; or if a sum of the number of bits included in the first bit sequence and the number of bits included in the second bit sequence is greater than N, the terminal device sends the first information by using the first resource of the PUSCH, and sends the second information by using the second resource.

In other words, after the terminal generates the first bit sequence corresponding to the first information and the second bit sequence corresponding to the second information, when performing channel encoding on the first bit sequence and the second bit sequence, the terminal performs independent encoding on the first bit sequence and the second bit sequence. Further, the terminal determines, depending on whether the sum of the first number of bits and the second number of bits is greater than N, whether to reserve the first resource in the resource of the PUSCH to transmit the first information and the second information. When the sum of the first number of bits and the second number of bits is less than or equal to N, the terminal determines to reserve the first resource in the resource of the PUSCH to transmit the first information and the second information; when the sum of the first number of bits and the second number of bits is greater than N, but the first number of bits is less than or equal to N, the terminal determines to reserve the first resource in the resource of the PUSCH to transmit the first information, and transmit the second information by using the second resource of the PUSCH; or when the sum of the first number of bits and the second number of bits is greater than N, and the first number of bits is greater than N, the terminal directly maps the first bit sequence to the first resource of the PUSCH, transmits the first information by using the first resource, and transmits the second information by using the second resource of the PUSCH. For descriptions of N, refer to the descriptions of N in the foregoing case 1. A start symbol of the second resource in time domain is a $1^{st}$ available symbol after a symbol carrying a $1^{st}$ DMRS, or a $1^{st}$ available symbol in the PUSCH.

To be specific, in the case 2, there are the following three execution branches:

In an execution branch 1 in the case 2, the sum of the first number of bits and the second number of bits is less than or equal to N, and the terminal device reserves the first resource in the resource of the PUSCH based on the first number of bits and the second number of bits. After mapping another bit sequence (a bit sequence other than the first bit sequence and the second bit sequence, for example, a bit sequence corresponding to CSI) in a UCI bit sequence to the resource of the PUSCH, the terminal device maps the first bit sequence and the second bit sequence to the reserved first resource. It may be understood that, when the terminal maps the first bit sequence and the second bit sequence to the reserved first resource, and finds that the reserved first resource already carries the another bit sequence, the terminal first deletes the another bit sequence carried on the reserved first resource, and then maps the first bit sequence and the second bit sequence to the reserved first resource.

In an execution branch 2 in the case 2, the sum of the first number of bits and the second number of bits is greater than N, and the first number of bits is less than or equal to N. The terminal device determines, based on the first number of bits, to reserve the first resource (the resource used to map the first bit sequence) in the resource of the PUSCH. Then, the terminal device determines the second resource in the resource of the PUSCH based on the second number of bits, and maps the second bit sequence to the second resource. After mapping another bit sequence (a bit sequence other than the first bit sequence, for example, the second bit sequence or a bit sequence corresponding to CSI) in a UCI bit sequence to the resource of the PUSCH, the terminal device maps the first bit sequence to the reserved first resource. It may be understood that, when the terminal maps the first bit sequence to the reserved first resource, and finds that the reserved first resource already carries another bit sequence, the terminal first deletes the another bit sequence carried on the reserved first resource, and then maps the first bit sequence to the reserved first resource.

In an execution branch 3 in the case 2, the sum of the first number of bits and the second number of bits is greater than N, and the first number of bits is greater than N. The terminal device determines the first resource in the resource of the PUSCH based on the first number of bits, and maps the first information to the first resource. Then, the terminal device determines the second resource in the resource of the PUSCH based on the second number of bits, and maps the second bit sequence to the second resource.

For ease of intuitive understanding of the method described in FIG. 2, the following further provides three mapping schemes with reference to this application: a mapping scheme 1, a mapping scheme 2a, and a mapping scheme 2b, to describe the two cases in S202. The mapping scheme 1 corresponds to the case 1 in S202, and the mapping scheme 2a and the mapping scheme 2b correspond to the case 2 in S202.

The following first describes the mapping scheme 1 in which the terminal sends the UCI to the access network device by using the resource of the PUSCH provided in this application. It may be understood that, in the subsequent mapping scheme 1 to mapping scheme 8, mapping A information mentioned in this application may be understood as mapping a bit sequence corresponding to the A information. For example, mapping the HARQ feedback information and the second information to an RE in $\Phi_1$ according to a rule is mapping the first bit sequence corresponding to the HARQ feedback information and the second bit sequence corresponding to the second information to the RE in $\Phi_1$ according to the rule, which is applicable throughout this specification.

Mapping scheme 1: The HARQ feedback information and the second information are configured to be jointly encoded, and the terminal performs resource mapping on the HARQ feedback information, the second information, the CSI, and uplink data (also referred to as a UL-SCH) in descending order of priorities (which may be a default priority order, a priority order specified in a communication protocol, or a priority order indicated by the access network device). It may be understood that, in the mapping scheme 1, the HARQ feedback information has a highest priority. When the resource is limited, the bit sequences corresponding to the HARQ feedback information and the second information may be preferentially mapped to a transmission resource. This increases a probability of complete transmission of the HARQ feedback information and the second information, improves service stability, and helps improve resource utilization.

It should be noted that the priority order indicated by the access network device mentioned in this application includes a case in which a priority is determined based on indication information of the access network device; or includes a case in which a priority order of at least two types of UCI is determined based on the default priority order (or the priority order specified in the communication protocol) when it is determined based on indication information of the access network device that priorities of the at least two types of UCI are the same, which is applicable throughout this specification. For example, the terminal device receives first indication information from the access network device, where the first indication information includes a priority index value 1 of the HARQ feedback information, a priority index value 1 of the second information, and a priority index value 0 of the CSI. Further, the terminal determines, based on the first indication information, that priorities of the HARQ feedback information and the second information are the same, and the priorities of the HARQ feedback information and the second information are higher than a priority of the CSI. In this case, the terminal may determine that the priority of the HARQ feedback information is higher than the priority of the second information based on the default priority order (or the priority order specified in the communication protocol). In other words, the priority order indicated by the access network device by using the first indication information is: the HARQ feedback information, the second information, and the CSI.

The mapping scheme 1 includes the following steps.

Step 1: If the sum of the first number of bits and the second number of bits is less than or equal to 2, and there is no CG-UCI, reserve an RE in $\Phi_1$ according to a rule.

That the sum of the first number of bits and the second number of bits is less than or equal to 2 includes a case in which the sum of the first number of bits and the second number of bits is less than or equal to 2, or a case in which the HARQ feedback information does not exist and the second number of bits is less than or equal to 2, or a case in which the second information does not exist and the first number of bits is less than or equal to 2. The rule for reserving the RE in $\Phi_1$ is as follows:

A number $Q'_{ACK}$ of reserved REs satisfies a formula (1):

$$Q'_{ACK} = min\left\{ \left\lceil \frac{(O_{ACK}+O_{CG-UCI}+O_{XR-UCI}+L_{ACK}) \cdot \beta^{PUSCH}_{offset} \cdot \Sigma^{N^{PUSCH}_{symb,all}-1}_{l=0} M^{UCI}_{sc}(l)}{\Sigma^{C_{UL-SCH}-1}_{r=0} K_r} \right\rceil, \left\lceil \alpha \cdot \Sigma^{N^{PUSCH}_{symb,all}-1}_{l=l_0} M^{UCI}_{sc}(l) \right\rceil \right\} \quad (1)$$

$Q'_{ACK}$ is a number of resources for transmitting the HARQ feedback information and the second information, and may be a number of encoded modulation symbols when the HARQ feedback information and the second information are jointly encoded. $O_{ACK}$ is the first number of bits. $O_{CG\text{-}UCI}$ is a number of bits included in a bit sequence corresponding to the CG-UCI, and $O_{CG\text{-}UCI}$ is 0 in step 1. $O^{XR\text{-}UCI}$ is the second number of bits. $L_{ACK}$ is a number of check bits of CRC of the first information. If $O_{ACK} \geq 360$, $L_{ACK} = 11$. Otherwise, calculation is performed according to an encoding rule of a polar code. $\beta_{offset}^{PUSCH}$ is an offset value, and is used to change a number of resources occupied by the UCI, to adjust a bit rate of the UCI. $\beta_{offset}^{PUSCH}$ may be $\beta_{offset}^{HARQ-ACK}$, that is, $\beta_{offset}^{PUSCH} = \beta_{offset}^{HARQ-ACK}$. $C_{UL\text{-}SCH}$ is a number of UL-SCH code blocks transmitted on the PUSCH. If a DCI format for scheduling PUSCH transmission includes a CBGTI field indicating that UE does not transmit an r$^{th}$ code block, $K_r=0$. Otherwise, K, is a size of an r$^{th}$ code block of the UL-SCH transmitted on the PUSCH. $M_{sc}^{UCI}(l)$ is a number of REs that can be occupied by the UCI on a $l^{th}$ symbol. If there is a DMRS on a current symbol (that is, the current symbol is used to transmit the DMRS), $M_{sc}^{UCI}(l)=0$. If there is no DMRS on a current symbol,

$$M_{sc}^{UCI}(l) = M_{sc}^{PUSCH} - M_{sc}^{PT-RS}(l)$$, where $M_{sc}^{PT-RS}(l)$ is a number of REs that can be occupied by a PT-RS on the $l^{th}$ symbol. $\alpha$ is a scaling parameter. $l_0$ is a 1$^{st}$ symbol after the DMRS.

Then, a location of the reserved RE in $\Phi_1$ is determined according to the following mapping rules:

(1) Mapping starts from a 1$^{st}$ OFDM symbol after a 1$^{st}$ DMRS. If a number of bits that can be carried by an allocated RE on a current symbol is less than a total length of the first bit sequence and the second bit sequence, it indicates that the allocated RE on the current symbol is insufficient. After the RE on the current symbol is fully occupied, mapping continues to be performed on a next symbol.

(2) If a number of REs required by UCI of this type (that is, the HARQ feedback information and the second information) exceeds half of a number of REs that can be used for transmitting the UCI on the OFDM symbol, the UCI of this type is continuously mapped to the REs; otherwise, the UCI is evenly mapped to the REs on the OFDM symbol, to achieve a diversity gain.

Step 2: If the sum of the first number of bits and the second number of bits is greater than 2, or if the HARQ feedback information, the second information, and the CG-UCI all exist, map the HARQ feedback information, the second information, and the CG-UCI (if any) to the RE in $\Phi_1$ according to a rule, and update $\Phi_1$ to $\Phi_1$ with the RE to which the HARQ feedback information, the second information, and the CG-UCI (if any) are mapped being removed.

That the sum of the first number of bits and the second number of bits is greater than 2 includes a case in which the sum of the first number of bits and the second number of bits is greater than 2, or a case in which the HARQ feedback information does not exist and the second number of bits is greater than 2, or a case in which the second information does not exist and the first number of bits is greater than 2. The rule for mapping the HARQ feedback information, the second information, and the CG-UCI to the RE in $\Phi_1$ is as follows:

(1) Mapping starts from a 1$^{st}$ OFDM symbol after a 1$^{st}$ DMRS. If a number of bits that can be carried by an allocated RE resource on a current symbol is less than a length of a generated sequence of the HARQ feedback information, the second information, and the CG-UCI (if any), it indicates that the allocated RE on the current symbol is insufficient. After the RE on the current symbol is fully occupied, mapping continues to be performed on a next symbol.

(2) If a number of REs required by UCI of this type (that is, the HARQ feedback information, the second information, and the CG-UCI (if any)) exceeds half of a number of REs that can be used for transmitting the UCI on the OFDM symbol, the UCI of this type is continuously mapped to the REs; otherwise, the UCI of this type is evenly mapped to the REs on the OFDM symbol, to achieve a diversity gain.

Step 2A: If there is the CG-UCI, and there is no HARQ feedback information or second information, map the CG-UCI to the RE in $\Phi_1$ according to a rule, and update $\Phi_1$ to $\Phi_1$ with the RE to which the CG-UCI is mapped being removed.

The rule for mapping the CG-UCI to the RE in $\Phi_1$ is as follows:

(1) Mapping starts from a 1$^{st}$ OFDM symbol after a 1$^{st}$ DMRS. If a number of bits that can be carried by an allocated RE resource on a current symbol is less than a length of a generated sequence of the CG-UCI, it indicates that the allocated RE on the current symbol is insufficient. After the RE on the current symbol is fully occupied, mapping continues to be performed on a next symbol.

(2) If a number of REs required by UCI of this type (that is, the CG-UCI) exceeds half of a number of REs that can be used for transmitting the UCI on the OFDM symbol, the UCI of this type is continuously mapped to the REs; otherwise, the UCI of this type is evenly mapped to the REs on the OFDM symbol, to achieve a diversity gain.

Step 3: If there is the CSI, map the CSI to the RE in $\Phi_1$ according to a rule, and update $\Phi_1$ to $\Phi_1$ with the RE to which the CSI is mapped being removed.

The rule for mapping the CSI to the RE in $\Phi_1$ is as follows:

(1) Mapping starts from a 1st OFDM symbol that is not used to transmit a DMRS. If a number of bits that can be carried by an allocated RE resource on a current symbol is less than a length of a generated sequence of the CSI, it indicates that the allocated RE on the current symbol is insufficient. After the RE on the current symbol is fully occupied, mapping continues to be performed on a next symbol.

(2) If a number of REs required by UCI of this type (that is, the CSI) exceeds half of a number of REs that can be used for transmitting the UCI on the OFDM symbol, the UCI of this type is continuously mapped to the REs; otherwise, the UCI of this type is evenly mapped to the REs on the OFDM symbol, to achieve a diversity gain.

It should be noted that, in step 3, the CSI may occupy the reserved first resource in step 1. When the CSI includes a CSI part 1 and a CSI part 2, the CSI part 1 is first mapped to $\Phi_1$, and $\Phi_1$ is updated to $\Phi_1$ with an RE to which the CSI part 1 is mapped being removed; and then the CSI part 2 is mapped to $\Phi_1$, and $\Phi_1$ is updated to $\Phi_1$ with an RE to which the CSI part 2 is mapped being removed.

Step 4: If there is the UL-SCH, map the UL-SCH to the RE in $\Phi_1$ according to a rule.

The rule for mapping the UL-SCH to the RE in $\Phi_1$ is as follows:

(1) Mapping starts from a 1st OFDM symbol. If a number of bits that can be carried by an allocated RE resource on a current symbol is less than a length of a generated sequence of the XR-UC, it indicates that the allocated RE on the current symbol is insufficient. After the RE on the current symbol is fully occupied, mapping continues to be performed on a next symbol.

(2) Perform continuous mapping to the RE.

It should be noted that, in step 4, the UL-SCH may occupy the reserved first resource in step 1.

Step 5: If the RE is reserved for the HARQ feedback information and the second information in step 1, map the HARQ feedback information and the second information to the reserved RE in step 1 according to a rule.

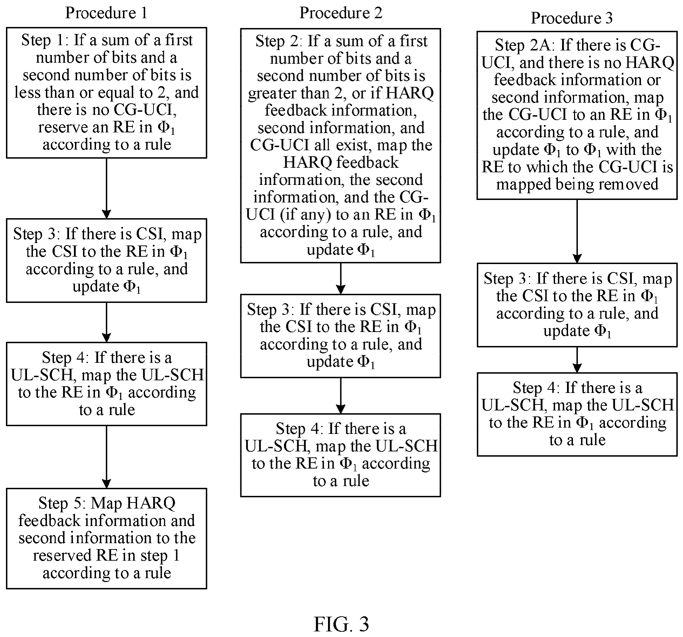

The foregoing steps may be expanded according to different conditions, as shown in FIG. 3 (from left to right, a procedure 1, a procedure 2, and a procedure 3 are shown). It can be learned that, if the sum of the first number of bits and the second number of bits is 0 bits, 1 bit, or 2 bits, and there is no CG-UCI, the terminal punctures (puncture) the reserved RE of the PUSCH to transmit the HARQ feedback information and the second information. If the sum of the first number of bits and the second number of bits is greater than 2 bits, or there is the CG-UCI, the terminal transmits the HARQ feedback information and the second information through rate matching on the PUSCH. For UCI of another type, the terminal performs rate matching transmission on the PUSCH.

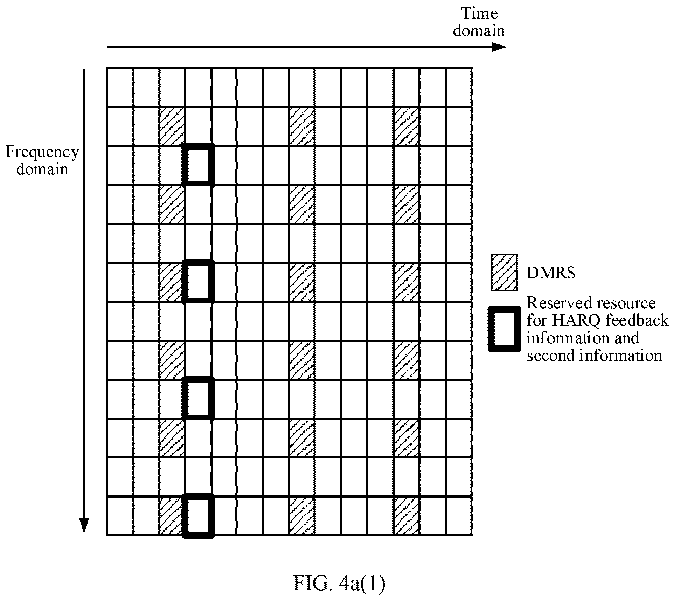

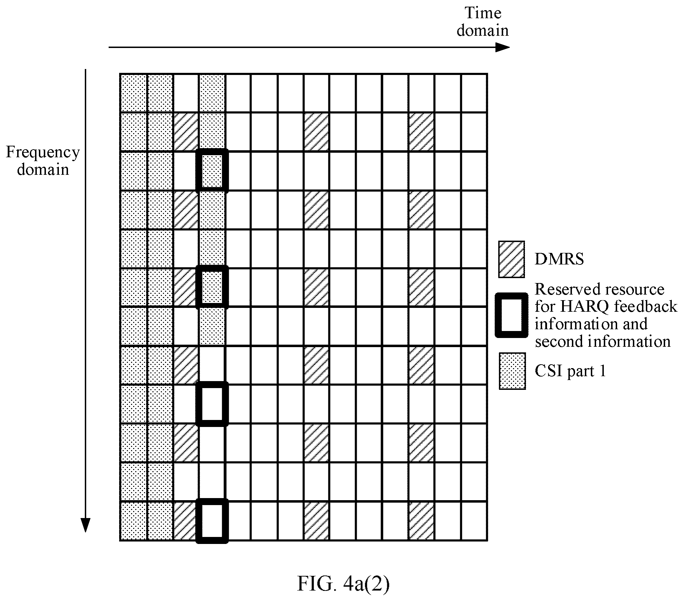

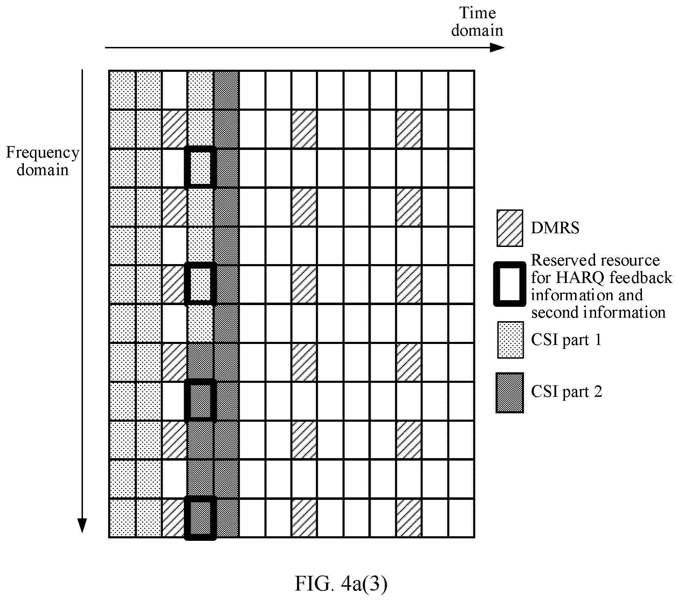

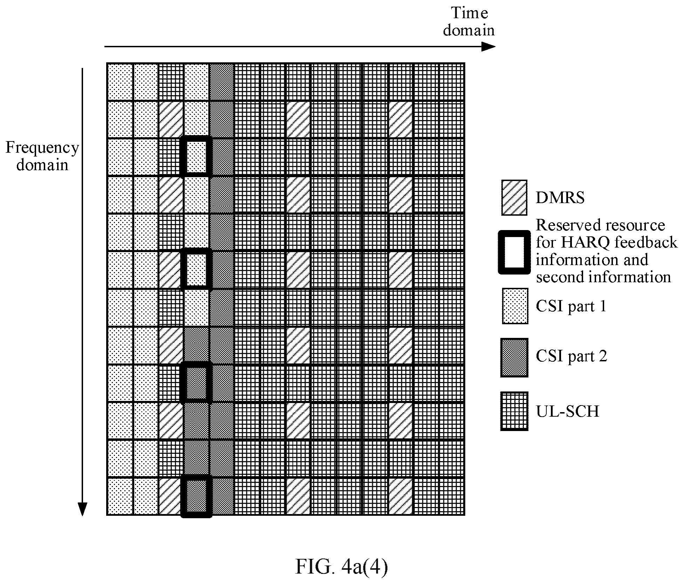

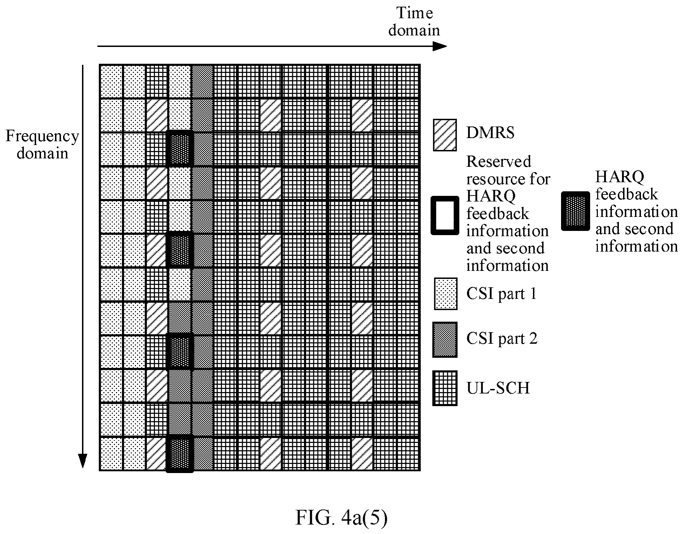

It can be learned that the execution branch 1 in the case 1 in S202 corresponds to the procedure 1 (that is, a mapping procedure when the sum of the first number of bits and the second number of bits is less than or equal to 2 bits) in FIG. 3. The first resource is the reserved RE in step 1, and is used to transmit the HARQ feedback information and the second information. FIG. 4a(1) to FIG. 4a(5) are a diagram of a mapping rule corresponding to the procedure 1 in FIG. 3. FIG. 4a(1), FIG. 4a(2), FIG. 4a(3), FIG. 4a(4), and FIG. 4a(5) are diagrams of performing resource mapping on UCI of various types according to the procedure 1 in FIG. 3. It should be noted that, when resource mapping is performed on information (which may also be understood as a type of UCI) according to a rule of the information, if the information (or understood as a bit sequence corresponding to the information) may occupy a current entire symbol, the information occupies the current symbol, and then occupies a next symbol; or if the information is insufficient to occupy a current entire symbol, the information is distributed on a frequency domain resource at an equal interval on the current symbol.

First, as shown in (1) in FIG. 4a, starting from a 1st available symbol after a symbol used to transmit a 1st DMRS, a resource is reserved based on a sum of a number of bits of the HARQ feedback information and a number of bits of the second information, to be a reserved area. In FIG. 4a(1), that the HARQ feedback information and the second information are distributed on an RE of the symbol at an equal interval is used as an example. Then, as shown in FIG. 4a(2) and FIG. 4a(3), starting from a 1st available symbol that is not used to transmit a DMRS, the CSI part 1 and the CSI part 2 are sequentially mapped. In FIG. 4a(2) and FIG. 4a(3), that the CSI part 1 and the CSI part 2 are continuously mapped to an RE of the symbol is used as an example. Next, as shown in FIG. 4a(4), the UL-SCH is mapped starting from a 1st available symbol. Finally, as shown in FIG. 4a(5), the HARQ feedback information and the second information are mapped to the reserved resource. It should be noted that, because a number of bits represented by each symbol in a resource block depends on a selected modulation order, a number of resource elements to which various types of UCI and uplink data are mapped in the figure of this application is merely an example.

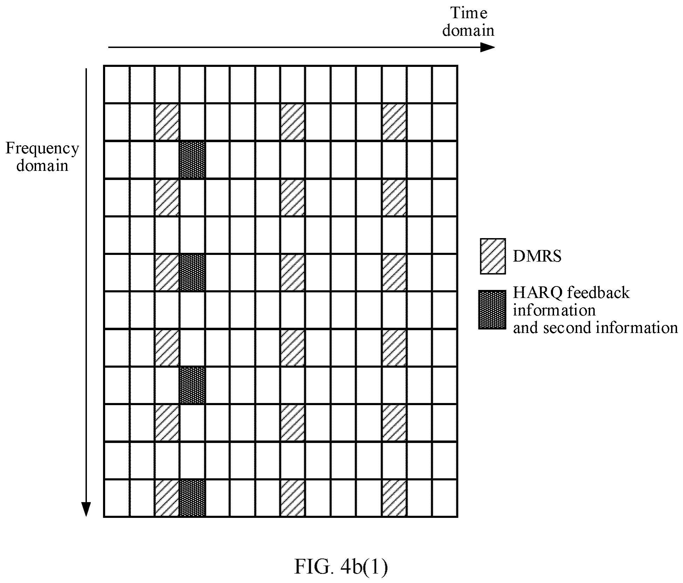

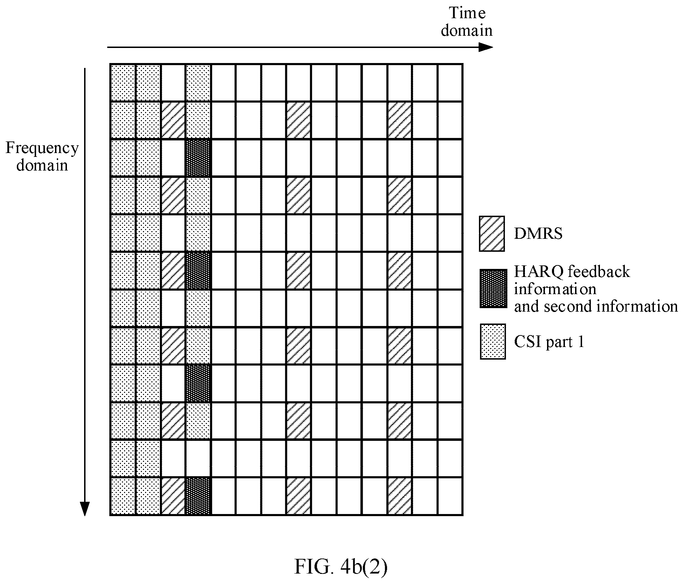

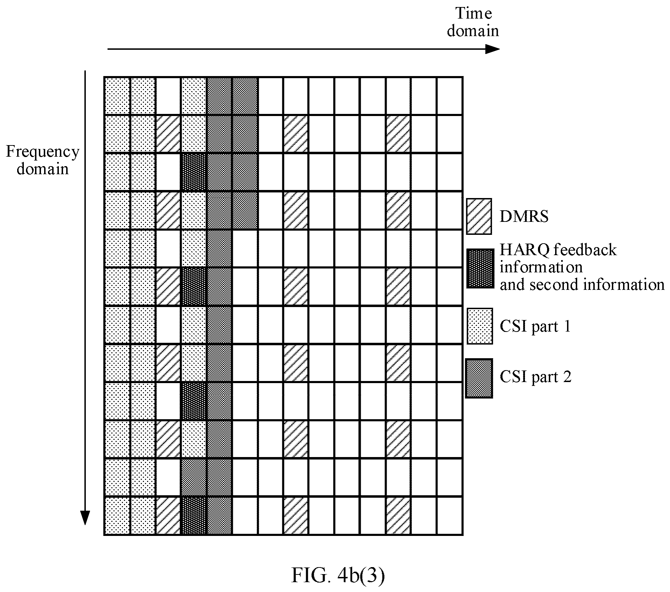

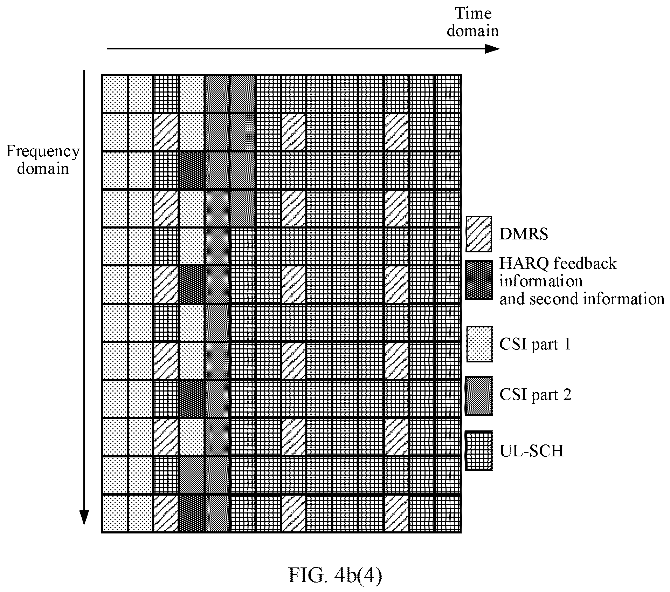

It can be learned that the execution branch 2 in the case 1 in S202 corresponds to the procedure 2 (that is, a mapping procedure when the sum of the first number of bits and the second number of bits is greater than 2 bits) in FIG. 3. The first resource is the RE used to map the HARQ feedback information and the second information in step 2. FIG. 4b(1) to FIG. 4b(4) are a diagram of a mapping rule corresponding to the procedure 2 in FIG. 3. FIG. 4b(1), FIG. 4b(2), FIG. 4b(3), and FIG. 4b(4) are diagrams of performing resource mapping on UCI of various types according to the procedure 2 in FIG. 3.

First, as shown in FIG. 4b(1), starting from a 1st available symbol after a symbol used to transmit a 1st DMRS, the HARQ feedback information and the second information are mapped. In FIG. 4b(1), that the HARQ feedback information and the second information are distributed on an RE of the symbol at an equal interval is used as an example. Then, as shown in FIG. 4b(2) and FIG. 4b(3), starting from a 1st available symbol that is not used to transmit a DMRS, the CSI part 1 and the CSI part 2 are sequentially mapped. In FIG. 4b(2) and FIG. b(3), that the CSI part 1 and the CSI part 2 are continuously mapped to an RE of the symbol is used as an example. Next, as shown in FIG. 4b(4), the UL-SCH is mapped starting from a 1st available symbol.

The following further describes the mapping scheme 2a and the mapping scheme 2b in which the terminal sends the UCI to the access network device by using the resource of the PUSCH provided in this application.

Mapping scheme 2a: The HARQ feedback information and the second information are configured to be independently encoded (or not configured to be jointly encoded), and the terminal performs resource mapping on the HARQ feedback information, the second information, the CSI, and the UL-SCH in descending order of priorities (which may be a default priority order, a priority order specified in a communication protocol, or a priority order indicated by the access network device). It may be understood that, in the mapping scheme 2a, the HARQ feedback information has a highest priority. When the resource is limited, the bit sequence corresponding to the HARQ feedback information may be preferentially mapped to a transmission resource. This increases a probability of complete transmission of the HARQ feedback information, thereby improving service stability. On this basis, a priority of the second information is higher than a priority of the CSI. This helps increase a probability of complete transmission of the second information, thereby improving resource utilization.

The mapping scheme 2a includes the following steps.

Step 1A: If the sum of the first number of bits and the second number of bits is less than or equal to 2, and there is no CG-UCI, reserve an RE in $\Phi_1$ according to a rule.

That the sum of the first number of bits and the second number of bits is less than or equal to 2 includes a case in which the HARQ feedback information does not exist and the second number of bits is less than or equal to 2, or a case in which the second information does not exist and the first number of bits is less than or equal to 2. For the rule for reserving the RE in $\Phi_1$, refer to the rule for reserving the RE in $\Phi_1$ described in step 1 in the foregoing mapping scheme 1.

Step 1B: If the sum of the first number of bits and the second number of bits is greater than 2, the first number of bits is less than or equal to 2, and there is no CG-UCI, reserve an RE (an RE used to map the first bit sequence) in $\Phi_1$ according to a rule.

The rule for reserving the RE in $\Phi_1$ is as follows:

First, a number of reserved REs satisfies the foregoing formula (1). $Q'_{ACK}$ in the formula (1) is a number of resources for transmitting the HARQ feedback information, and may be a number of encoded modulation symbols when the HARQ feedback information is encoded. $O_{CG-UCI}$ is 0, and $O^{XR-UCI}$ is 0. Then, a location of the reserved RE in $\Phi_1$ is determined according to the following mapping rules:

(1) Mapping starts from a 1st OFDM symbol after a 1st DMRS. If a number of bits that can be carried by an allocated RE on a current symbol is less than a length of a generated sequence of the HARQ feedback information, it indicates that the allocated RE on the current symbol is insufficient. After the RE on the current symbol is fully occupied, mapping continues to be performed on a next symbol.

(2) If a number of REs required by UCI of this type (that is, the HARQ feedback information) exceeds half of a number of REs that can be used for transmitting the UCI on the OFDM symbol, the UCI of this type is continuously mapped to the REs; otherwise, the UCI of this type is evenly mapped to the REs on the OFDM symbol, to achieve a diversity gain.

Step 2: If the first number of bits is greater than 2, or if both the HARQ feedback information and the CG-UCI exist, map the HARQ feedback information and the CG-UCI (if any) to the RE in $\Phi_1$ according to a rule, and update $\Phi_1$ to $\Phi_1$ with the RE to which the HARQ feedback information and the CG-UCI (if any) are mapped being removed.

The rule for mapping the HARQ feedback information and the CG-UCI to the RE in $\Phi_1$ is as follows:

(1) Mapping starts from a 1st OFDM symbol after a 1st DMRS. If a number of bits that can be carried by an allocated RE resource on a current symbol is less than a length of a generated sequence of the HARQ feedback information and the CG-UCI (if any), it indicates that the allocated RE on the current symbol is insufficient. After the RE on the current symbol is fully occupied, mapping continues to be performed on a next symbol.

(2) If a number of REs required by UCI of this type (that is, the HARQ feedback information and the CG-UCI (if any)) exceeds half of a number of REs that can be used for transmitting the UCI on the OFDM symbol, the UCI of this type is continuously mapped to the REs; otherwise, the UCI is evenly mapped to the REs on the OFDM symbol, to achieve a diversity gain.

Step 2A: If there is the CG-UCI, and there is no HARQ feedback information, map the CG-UCI to the RE in $\Phi_1$ according to a rule, and update $\Phi_1$ to $\Phi_1$ with the RE to which the CG-UCI is mapped being removed.

For the rule for mapping the CG-UCI to the RE in $\Phi_1$, refer to the rule for mapping the CG-UCI to the RE in $\Phi_1$ described in step 2A in the foregoing mapping scheme 1.

Step 2B: If there is the second information, and the sum of the first number of bits and the second number of bits is greater than 2, map the second information to the RE in $\Phi_1$ according to a rule, and update $\Phi_1$ to $\Phi_1$ with the RE to which the second information is mapped being removed.

A case in which there is the second information and the sum of the first number of bits and the second number of bits is greater than 2 includes a case in which the second number of bits is greater than 2, or a case in which the first number of bits is greater than 2. The rule for mapping the second information to the RE in $\Phi_1$ is as follows:

(1) Mapping starts from a 1st OFDM symbol after a 1st DMRS, or mapping starts from a 1st OFDM symbol that is not used to transmit a DMRS. If a number of bits that can be carried by an allocated RE resource on a current symbol is less than a length of a generated sequence of the second information, it indicates that the allocated RE on the current symbol is insufficient. After the RE on the current symbol is fully occupied, mapping continues to be performed on a next symbol.

(2) If a number of REs required by UCI of this type (that is, the second information) exceeds half of a number of REs that can be used for transmitting the UCI on the OFDM symbol, the UCI of this type is continuously mapped to the REs; otherwise, the UCI of this type is evenly mapped to the REs on the OFDM symbol, to achieve a diversity gain.

Step 3: If there is the CSI, map the CSI to the RE in $\Phi_1$ according to a rule, and update $\Phi_1$ to $\Phi_1$ with the RE to which the CSI is mapped being removed.

For the rule for mapping the CSI to the RE in $\Phi_1$, refer to the rule for mapping the CSI to the RE in $\Phi_1$ described in step 3 in the foregoing mapping scheme 1.

Step 4: If there is the UL-SCH, map the UL-SCH to the RE in $\Phi_1$ according to a rule.

For the rule for mapping the UL-SCH to the RE in $\Phi_1$, refer to the rule for mapping the UL-SCH to the RE in $\Phi_1$ described in step 4 in the foregoing mapping scheme 1.

Step 5A: If an RE is reserved for the HARQ feedback information and the XR-UCI in step 1A, map the HARQ feedback information and the XR-UCI to the reserved RE in step 1A according to a rule.

Step 5B: If an RE is reserved for the HARQ feedback information in step 1B, map the HARQ feedback information to the reserved RE in step 1B according to a rule.

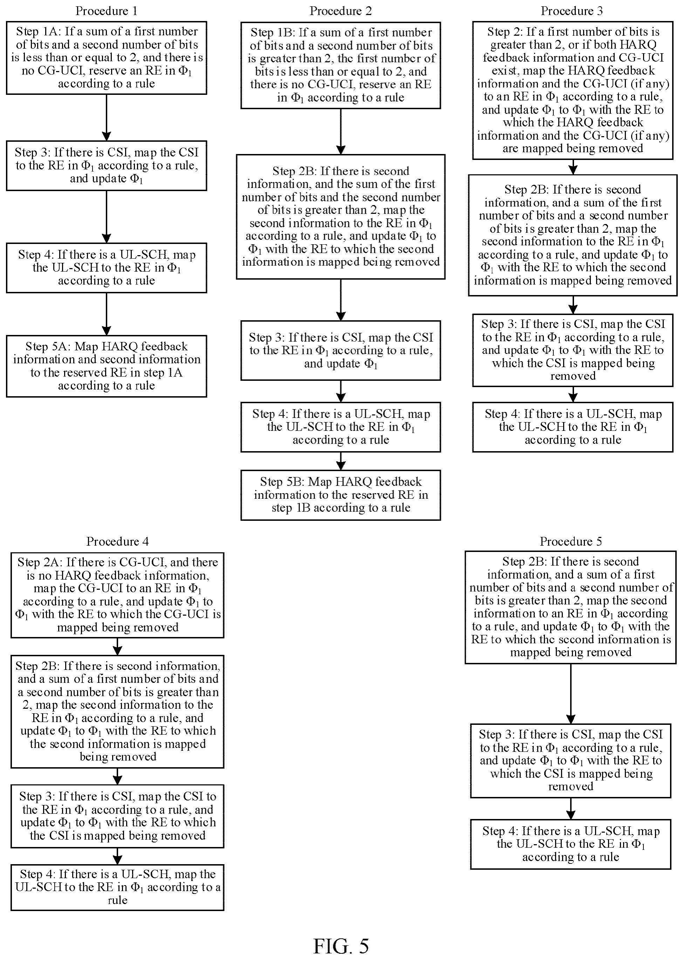

The foregoing steps may be expanded according to different conditions, as shown in FIG. 5 (from left to right, a procedure 1, a procedure 2, a procedure 3, a procedure 4, and a procedure 5 are shown). It can be learned that, if the sum of the first number of bits and the second number of bits is 0 bits, 1 bit, or 2 bits, and there is no CG-UCI, the terminal punctures the PUSCH to transmit the HARQ feedback information and the second information. If the sum of the first number of bits and the second number of bits is greater than 2 bits, but the first number of bits is less than or equal to 2 bits, and there is no CG-UCI, the terminal punctures the PUSCH to transmit the HARQ feedback information. If the sum of the first number of bits and the second number of bits is greater than 2 bits, or there is the CG-UCI, the terminal transmits the HARQ feedback information through rate matching on the PUSCH and transmits the second information through rate matching on the PUSCH. For UCI of another type, the terminal performs rate matching transmission on the PUSCH.

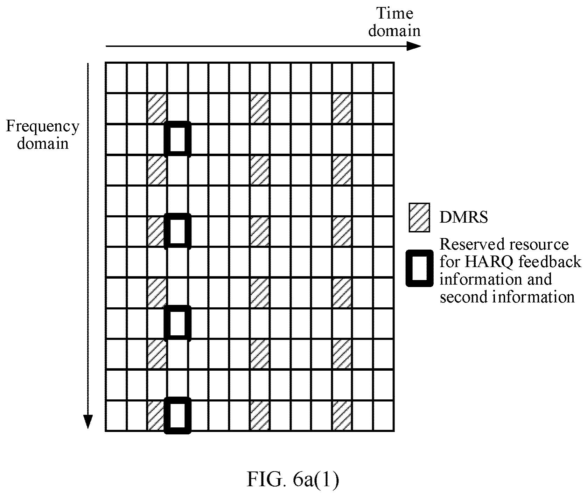

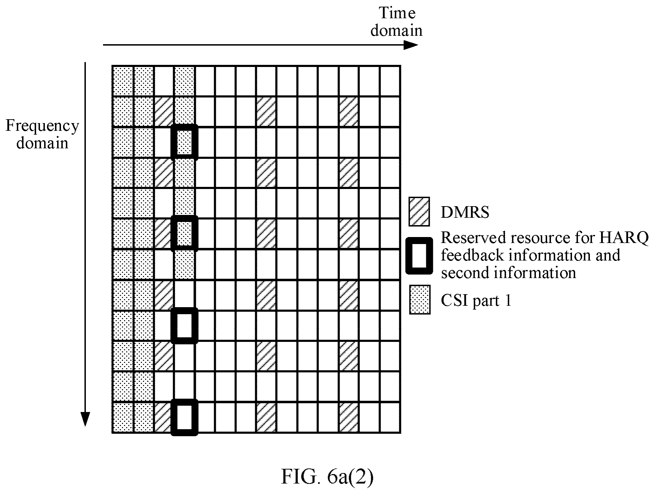

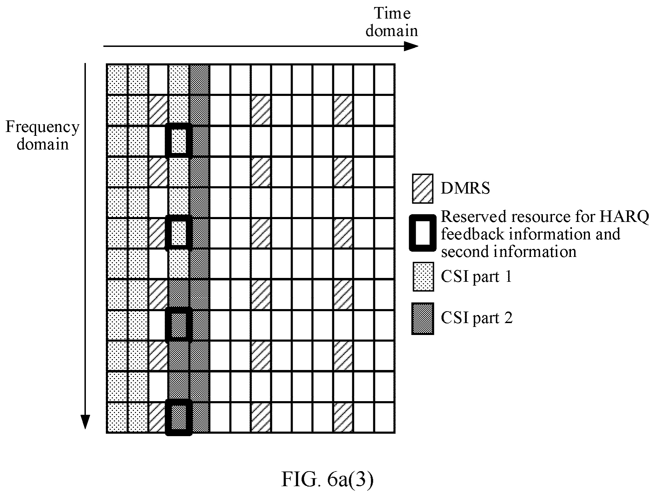

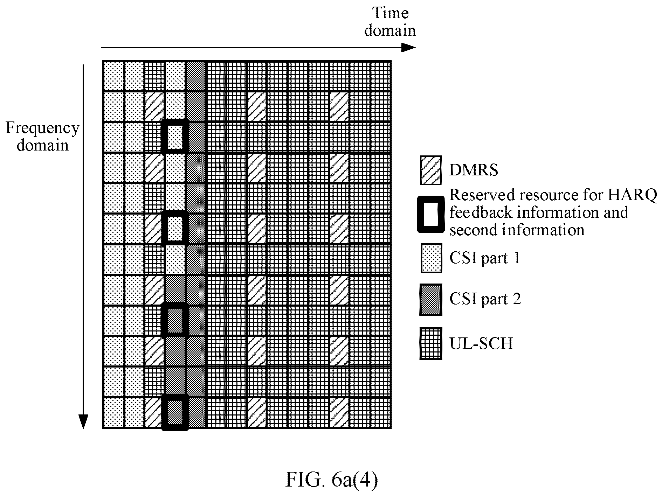

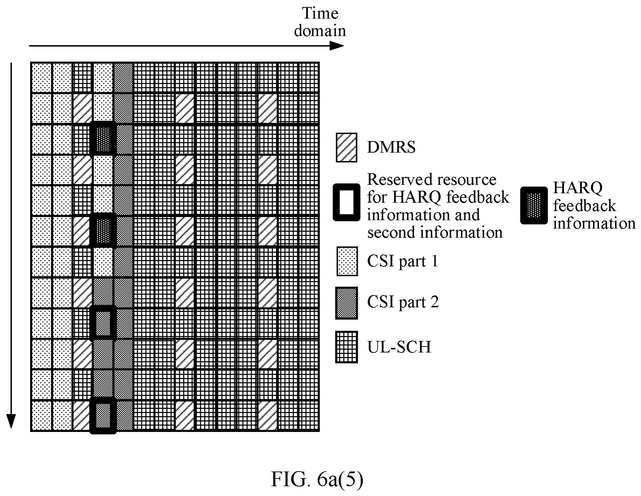

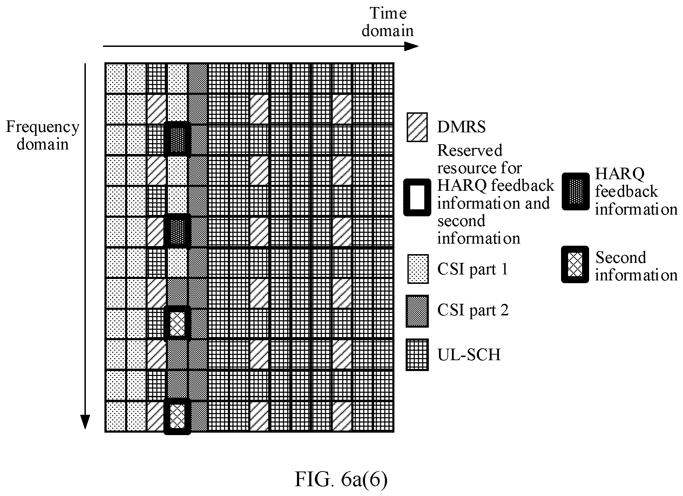

It can be learned that the execution branch 1 in the case 2 in S202 corresponds to the procedure 1 (that is, a mapping procedure when the first number of bits and the second number of bits are less than or equal to 2 bits) in FIG. 5. The first resource is the reserved RE in step 1A. FIG. 6a(1) to FIG. 6a(6) are a diagram of a mapping rule corresponding to the procedure 1 in FIG. 5. FIG. 6a(1), FIG. 6a(2), FIG. 6a(3), FIG. 6a(4), FIG. 6a(5), and FIG. 6a(6) are diagrams of performing resource mapping on UCI of various types according to the procedure 1 in FIG. 5.

First, as shown in FIG. 6a(1), starting from a 1st available symbol after a symbol used to transmit a 1st DMRS, a resource is reserved based on the sum of the first number of bits and the second number of bits, to be a reserved area. In FIG. 6a(1), that the HARQ feedback information and the XR-UCI are distributed on an RE of the symbol at an equal interval is used as an example. Then, as shown in FIG. 6a(2) and FIG. 6a(3), starting from a 1st available symbol that is not used to transmit a DMRS, the CSI part 1 and the CSI part 2 are sequentially mapped. In FIG. 6a(2) and FIG. 6a(3), that the CSI part 1 and the CSI part 2 are continuously mapped to an RE of the symbol is used as an example. Next, as shown in FIG. 6a(4), the UL-SCH is mapped starting from a 1st available symbol. Finally, as shown in FIG. 6a(5) and FIG. 6a(6), the HARQ feedback information and the second information are mapped to the reserved resource.

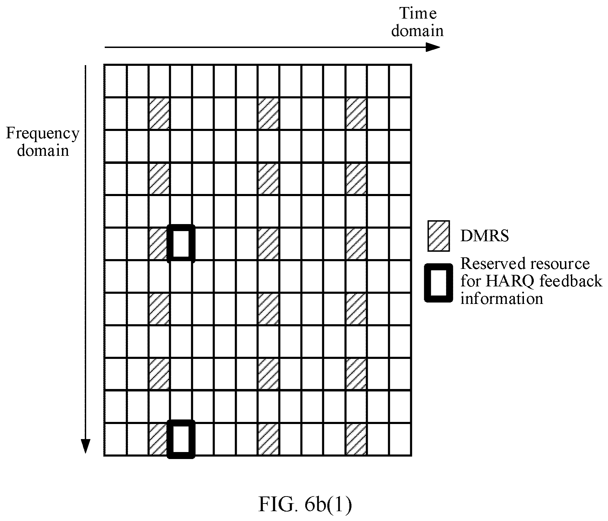

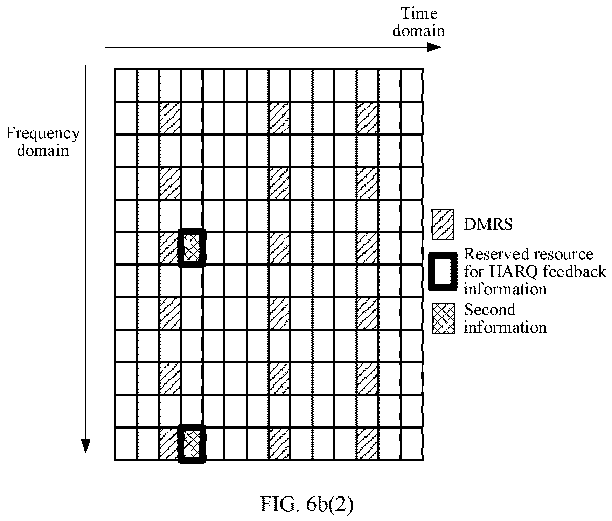

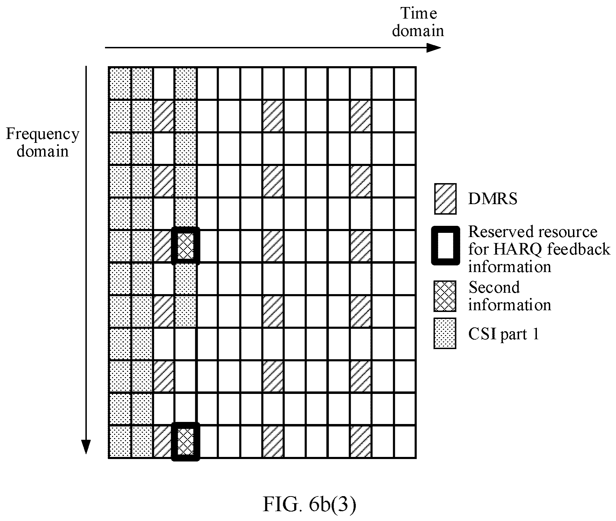

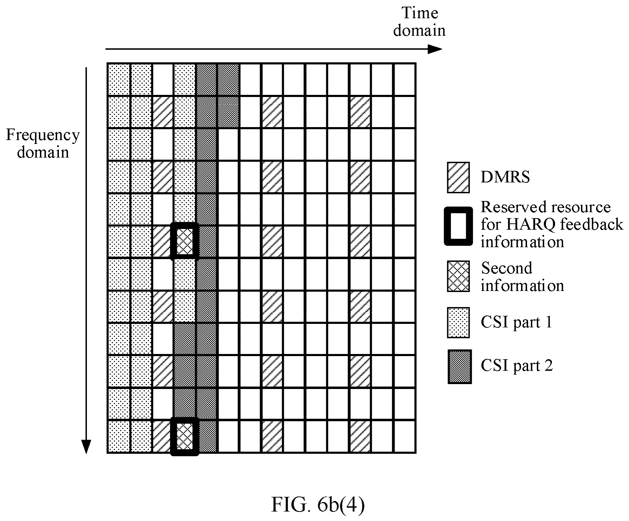

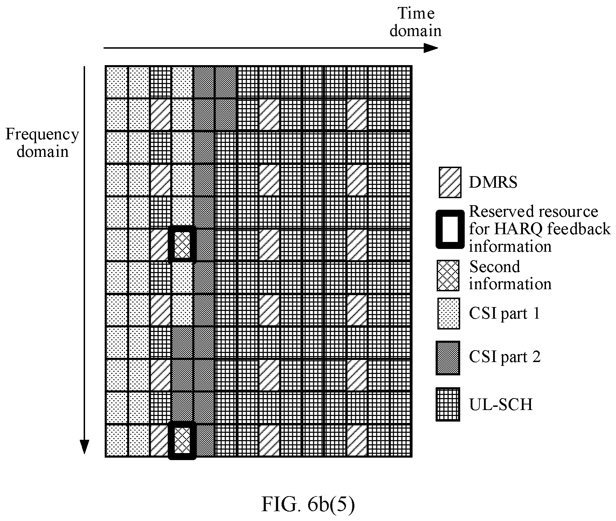

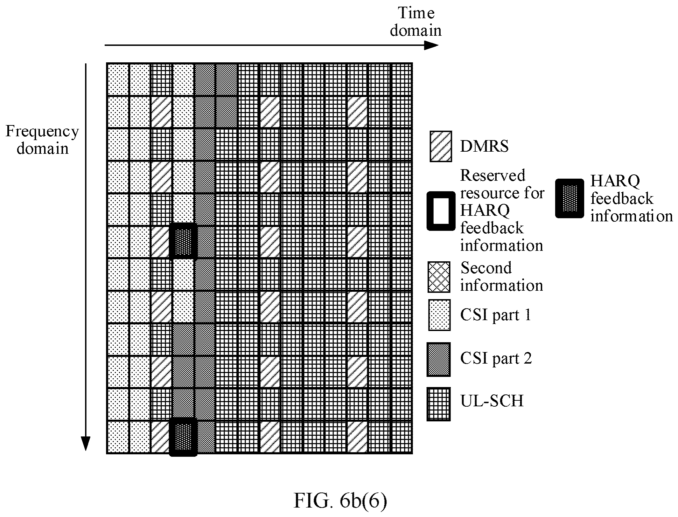

The execution branch 2 in the case 2 in S202 corresponds to the procedure 2 (that is, a mapping procedure when the first number of bits and the second number of bits are greater than 2 bits, but the HARQ feedback information is less than or equal to 2 bits) in FIG. 5. The first resource is the reserved RE in step 1B, and the second resource is the RE carrying (or is understood as mapping) the second information in step 2B. FIG. 6b(1) to FIG. 6b(6) are a diagram of a mapping rule corresponding to the procedure 2 in FIG. 5. FIG. 6b(1), FIG. 6b(2), FIG. 6b(3), FIG. 6b(4), FIG. 6b(5), and FIG. b(6) are diagrams of performing resource mapping on UCI of various types according to the procedure 2 in FIG. 5.

First, as shown in FIG. 6b(1), starting from a 1st available symbol after a symbol used to transmit a 1st DMRS, a resource is reserved based on the first number of bits, to be a reserved area. In FIG. 6b(1), that the HARQ feedback information is distributed on an RE of the symbol at an equal interval is used as an example. Then, as shown in FIG. 6b(2), starting from a 1st available symbol after a symbol used to transmit a 1st DMRS, the second information is mapped. In FIG. 6b(2), that the second information is distributed on an RE of the symbol at an equal interval is used as an example. Then, as shown in FIG. 6b(3) and FIG. 6b(4), starting from a 1st available symbol that is not used to transmit a DMRS, the CSI part 1 and the CSI part 2 are sequentially mapped. In FIG. 6b(3) and FIG. 6b(4), that the CSI part 1 and the CSI part 2 are continuously mapped to an RE of the symbol is used as an example. Next, as shown in FIG. 6b(5), the UL-SCH is mapped starting from a 1st available symbol. Finally, as shown in (6) in FIG. 6b, the HARQ feedback information is mapped to the reserved resource.

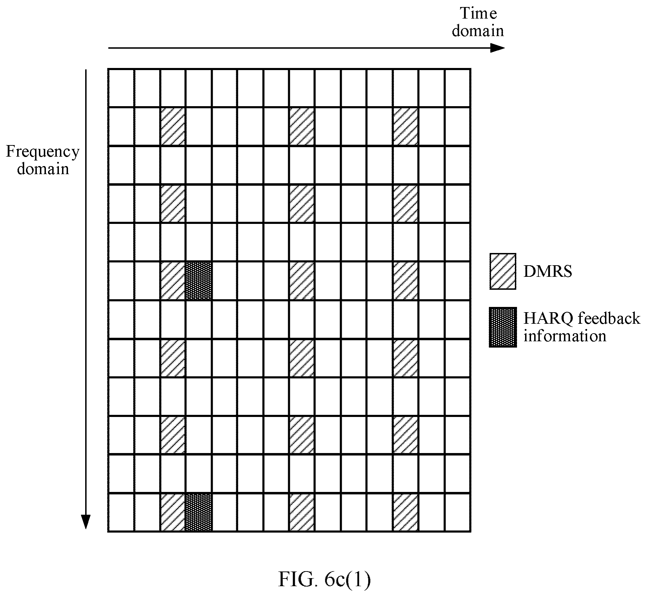

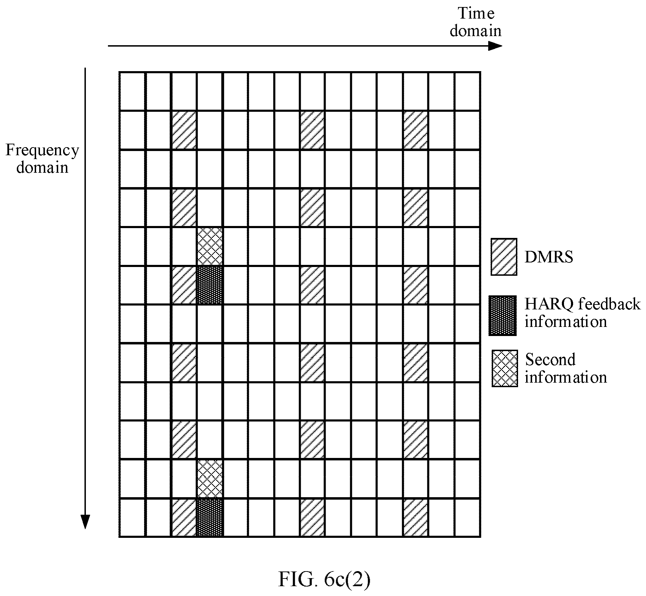

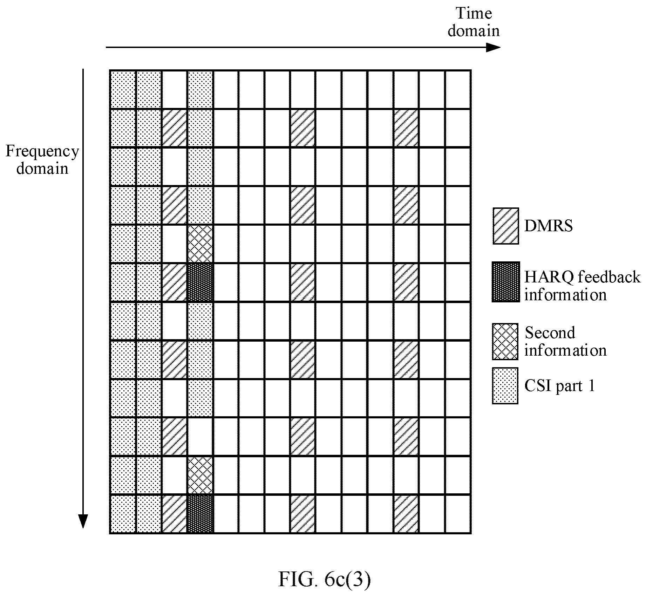

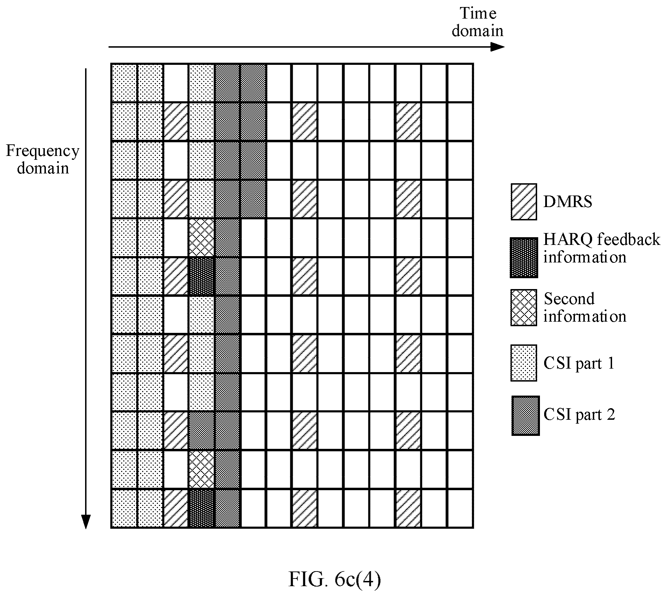

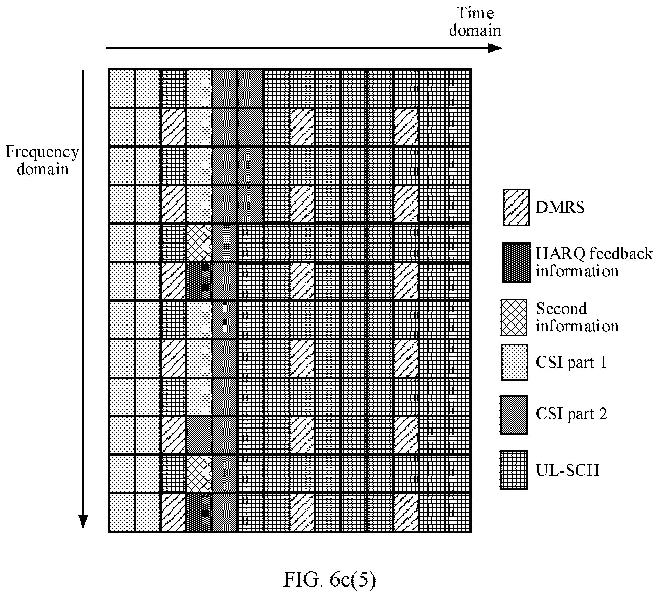

The execution branch 3 in the case 2 in S202 corresponds to the procedure 3 (that is, a mapping procedure in which the first number of bits is greater than 2 bits) in FIG. 5. The first resource is the RE carrying the HARQ feedback information in step 2, and the second resource is the RE carrying the second information in step 2B. FIG. 6c(1) to FIG. 6c(5) are a diagram of a mapping rule corresponding to the procedure 3 in FIG. 5. FIG. 6c(1), FIG. 6c(2), FIG. 6c(3), FIG. 6c(4), and FIG. 6c(5) are diagrams of performing resource mapping on UCI of various types according to the procedure 3 in FIG. 5.

First, as shown in FIG. 6c(1), starting from a 1st available symbol after a symbol used to transmit a 1st DMRS, the HARQ feedback information is mapped. In FIG. 6c(1), that the HARQ feedback information is distributed on an RE of the symbol at an equal interval is used as an example. Then, as shown in FIG. 6c(2), starting from a 1st available symbol after a symbol used to transmit a 1st DMRS, the second information is mapped. In FIG. 6c(2), that the second information is distributed on an RE of the symbol at an equal interval is used as an example. Then, as shown in FIG. 6c(3) and FIG. 6c(4), starting from a 1st available symbol that is not used to transmit a DMRS, the CSI part 1 and the CSI part 2 are sequentially mapped. In FIG. 6c(3) and FIG. 6c(4), that the CSI part 1 and the CSI part 2 are continuously mapped to an RE of the symbol is used as an example. Next, as shown in FIG. 6c(5), the UL-SCH is mapped starting from a 1st available symbol.

Mapping scheme 2b: The HARQ feedback information and the second information are configured to be independently encoded (or not configured to be jointly encoded), and the terminal performs resource mapping on the HARQ feedback information, the second information, the CSI, and the UL-SCH in descending order of priorities (which may be a default priority order, a priority order specified in a communication protocol, or a priority order indicated by the access network device).

The mapping scheme 2b includes the following steps.

Step 1A: If the first number of bits is less than or equal to 2 and there is no CG-UCI, reserve an RE (used to map the HARQ feedback information) in $\Phi_1$ according to a rule.

For the rule for reserving the RE in $\Phi_1$, refer to the rule for reserving the RE in $\Phi_1$ described in step 1B in the foregoing mapping scheme 2a.

Step 1B: If the first number of bits is greater than 2, or if both the HARQ feedback information and the CG-UCI exist, map the HARQ feedback information and the CG-UCI (if any) to the RE in $\Phi_1$ according to a rule, and update $\Phi_1$ to $\Phi_1$ with the RE to which the HARQ feedback information and the CG-UCI (if any) are mapped being removed.

For the rule for mapping the HARQ feedback information and the CG-UCI to the RE in $\Phi_1$, refer to the rule for mapping the HARQ feedback information and the CG-UCI to the RE in $\Phi_1$ described in step 2 in the foregoing mapping scheme 2a.

Step 2: If there is the CG-UCI, and there is no HARQ feedback information, map the CG-UCI to the RE in $\Phi_1$ according to a rule, and update $\Phi_1$ to $\Phi_1$ with the RE to which the CG-UCI is mapped being removed.

For the rule for mapping the CG-UCI to the RE in $\Phi_1$, refer to the rule for mapping the CG-UCI to the RE in $\Phi_1$ described in step 2A in the foregoing mapping scheme 1.

Step 3A: If the second number of bits is less than or equal to 2, reserve an RE (used to map the second information) in $\Phi_1$ according to a rule.

The rule for reserving the RE in $\Phi_1$ is as follows:

First, a number of reserved REs satisfies the foregoing formula (1). $Q'_{ACK}$ in the formula (1) is a number of resources for transmitting the second information, and may be a number of encoded modulation symbols when the second information is encoded. $O_{CG-UCI}$ is 0, and $O_{ACK}$ is 0. $\beta_{offset}^{PUSCH}$ may be $\beta_{offset}^{XR-UCI}$, that is $\beta_{offset}^{PUSCH} = \beta_{offset}^{XR-UCI}$. Then, a location of the reserved RE in $\Phi_1$ is determined according to the following mapping rules:

(1) Mapping starts from a 1st OFDM symbol after a 1st DMRS. If a number of bits that can be carried by an allocated RE on a current symbol is less than a length of a generated sequence of the second information, it indicates that the allocated RE on the current symbol is insufficient. After the RE on the current symbol is fully occupied, mapping continues to be performed on a next symbol.

(2) If a number of REs required by UCI of this type (that is, the second information) exceeds half of a number of REs that can be used for transmitting the UCI on the OFDM symbol, the UCI of this type is continuously mapped to the REs; otherwise, the UCI of this type is evenly mapped to the REs on the OFDM symbol, to achieve a diversity gain.

Step 3B: If the second number of bits is greater than 2, map the second information to the RE in $\Phi_1$ according to a rule, and update $\Phi_1$ to $\Phi_1$ with the RE to which the second information is mapped being removed.

For the rule for mapping the second information to the RE in $\Phi_1$, refer to the rule for mapping the second information to the RE in $\Phi_1$ described in step 2B in the foregoing mapping scheme 2a.

Step 4: If there is the CSI, map the CSI to the RE in $\Phi_1$ according to a rule, and update $\Phi_1$ to $\Phi_1$ with the RE to which the CSI is mapped being removed.

For the rule for mapping the CSI to the RE in $\Phi_1$, refer to the rule for mapping the CSI to the RE in $\Phi_1$ described in step 3 in the foregoing mapping scheme 1.

Step 5: If there is the UL-SCH, map the UL-SCH to the RE in $\Phi_1$ according to a rule.

For the rule for mapping the UL-SCH to the RE in $\Phi_1$, refer to the rule for mapping the UL-SCH to the RE in $\Phi_1$ described in step 4 in the foregoing mapping scheme 1.

Step 6: If an RE is reserved for the HARQ feedback information in step 1A, map the HARQ feedback information to the reserved RE in step 1A according to a rule.

Step 7: If an RE is reserved for the second information in step 3A, map the second information to the reserved RE in step 3A according to a rule.

It can be learned that a difference between the mapping scheme 2b and the mapping scheme 2a lies in that: in the mapping scheme 2a, resources used to map the HARQ feedback information and the second information are reserved at the same time, while in the mapping scheme 2b, resources used to map the HARQ feedback information and the second information are separately reserved. For beneficial effects of the mapping scheme 2b, refer to the beneficial effects of the mapping scheme 2a. Details are not described herein again.

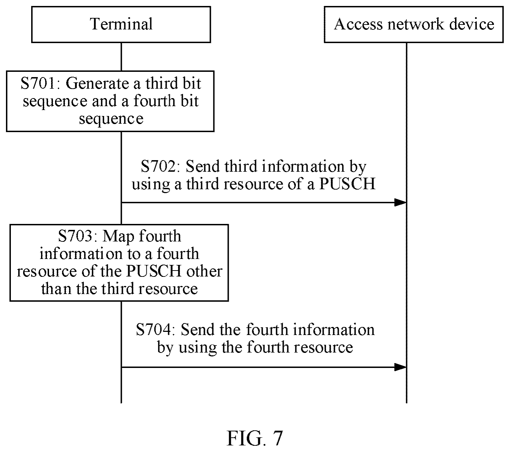

FIG. 7 is a schematic flowchart of another communication method according to an embodiment of this application.

S701: A terminal generates a third bit sequence and a fourth bit sequence. The third bit sequence corresponds to third information, the third information is HARQ feedback information, the fourth bit sequence corresponds to fourth information, and the fourth information indicates a CG resource used or unused in a CG periodicity time period.

The terminal determines that UCI that needs to be sent includes the HARQ feedback information and second information indicating the CG resource used or unused in the CG periodicity time period. When the UCI is multiplexed on a PUSCH, the terminal generates the third bit sequence of the HARQ feedback information and the fourth bit sequence corresponding to the fourth information.

It should be noted that the fourth information is also referred to as XR-UCI in this application. It may be understood that, in this application, an example in which a name of the fourth information is XR-UCI is used. In another solution, the fourth information may also have another name (for example, CG-skipUCI). The name of the fourth information is not specifically limited in this application.

S702: The terminal sends the third information by using a third resource of the PUSCH, where the third information is related to a number of bits included in the third bit sequence.

It should be noted that a number of third resources is related to the number of bits included in the third bit sequence (referred to as a third number of bits for short in the following), and it may be understood as that the number of third resources is determined based on the third number of bits.

A manner in which the terminal sends the third information by using the third resource of the PUSCH includes:

Manner 1: When the third number of bits is less than or equal to N, the terminal determines to reserve the third resource in the resource of the PUSCH to transmit first information. After mapping a bit sequence of UCI of another type (for example, the fourth information or CSI) to the resource of the PUSCH, the terminal maps the third bit sequence to the reserved third resource, that is, sends the third information by using the third resource. It may be understood that, when the terminal maps the third bit sequence to the reserved third resource, and finds that the reserved third resource already carries a bit sequence of the UCI of another type, the terminal first deletes the bit sequence that is of the UCI of another type and that is carried on the reserved third resource, and then maps the third bit sequence to the reserved third resource. For description of N, refer to the description of N in FIG. 2.

Manner 2: When the third number of bits is greater than N, the terminal directly maps the third bit sequence to the third resource.

S703: The terminal maps the fourth information to a fourth resource of the PUSCH other than the third resource. A number of fourth resources is related to a number of bits included in the fourth bit sequence.

The terminal determines the fourth resource from a resource other than the third resource in the resource of the PUSCH based on the number of bits included in the fourth bit sequence (referred to as a fourth number of bits for short in the following), and maps the fourth information to the fourth resource.

S704: The terminal sends the fourth information by using the fourth resource.

That the terminal sends the PUSCH to an access network device may be understood as that the terminal sends the fourth information to the access network device by using the fourth resource of the PUSCH.

It may be understood that, with reference to the communication method provided in FIG. 7, this application further provides a mapping scheme, namely, a mapping scheme 3. The following further describes the mapping scheme 3 in which the terminal sends the UCI to the access network device by using the resource of the PUSCH provided in this application.

Mapping scheme 3: The HARQ feedback information and the fourth information are configured to be independently encoded (or not configured to be jointly encoded), and the terminal performs resource mapping on the HARQ feedback information, the fourth information, the CSI, and a UL-SCH in descending order of priorities (which may be a default priority order, a priority order specified in a communication protocol, or a priority order indicated by the access network device). A difference between the mapping scheme 3 and the foregoing mapping scheme 2a (or mapping scheme 2b) lies in that when a sum of a number of bits of the HARQ feedback information and a number of bits of the fourth information is less than or equal to 2, resource mapping is not performed on the fourth information in a manner of reserving a resource.

The mapping scheme 3 includes the following steps.

Step 1: If the third number of bits is less than or equal to 2 and there is no CG-UCI, reserve an RE (used to map the HARQ feedback information) in $\Phi_1$ according to a rule.

For the rule for reserving the RE in $\Phi_1$, refer to the rule for reserving the RE in $\Phi_1$ described in step 1B in the foregoing mapping scheme 2a.

Step 2: If the third number of bits is greater than 2, or if both the HARQ feedback information and the CG-UCI exist, map the HARQ feedback information and the CG-UCI (if any) to the RE in $\Phi_1$ according to a rule, and update $\Phi_1$ to $\Phi_1$ with the RE to which the HARQ feedback information and the CG-UCI (if any) are mapped being removed.

For the rule for mapping the HARQ feedback information and the CG-UCI to the RE in $\Phi_1$, refer to the rule for mapping the HARQ feedback information and the CG-UCI to the RE in $\Phi_1$ described in step 2 in the foregoing mapping scheme 2a.

Step 2A: If there is the CG-UCI, and there is no HARQ feedback information, map the CG-UCI to the RE in $\Phi_1$ according to a rule, and update $\Phi_1$ to $\Phi_1$ with the RE to which the CG-UCI is mapped being removed.

For the rule for mapping the CG-UCI to the RE in $\Phi_1$, refer to the rule for mapping the CG-UCI to the RE in $\Phi_1$ described in step 2A in the foregoing mapping scheme 1.

Step 2B: If there is the fourth information, map the fourth information to the RE in $\Phi_1$ according to a rule, and update $\Phi_1$ to $\Phi_1$ with the RE to which the fourth information is mapped being removed.

The rule for mapping the fourth information to the RE in $\Phi_1$ is as follows:

(1) Mapping starts from a 1st OFDM symbol after a 1st DMRS, or mapping starts from a 1st OFDM symbol that is not used to transmit a DMRS. If a number of bits that can be carried by an allocated RE resource on a current symbol is less than a length of a generated sequence of the fourth information, it indicates that the allocated RE on the current symbol is insufficient. After the RE on the current symbol is fully occupied, mapping continues to be performed on a next symbol.

(2) If a number of REs required by UCI of this type (that is, the fourth information) exceeds half of a number of REs that can be used for transmitting the UCI on the OFDM symbol, the UCI of this type is continuously mapped to the REs; otherwise, the UCI of this type is evenly mapped to the REs on the OFDM symbol, to achieve a diversity gain.

It should be noted that, in step 2B, the fourth information may occupy the reserved RE in step 1, or may not occupy the reserved RE in step 1. In the method described in FIG. 7, the fourth information cannot occupy the reserved RE in step 1.

Step 3: If there is the CSI, map the CSI to the RE in $\Phi_1$ according to a rule, and update $\Phi_1$ to $\Phi_1$ with the RE to which the CSI is mapped being removed.

For the rule for mapping the CSI to the RE in $\Phi_1$, refer to the rule for mapping the CSI to the RE in $\Phi_1$ described in step 3 in the foregoing mapping scheme 1.

Step 4: If there is the UL-SCH, map the UL-SCH to the RE in $\Phi_1$ according to a rule.

For the rule for mapping the UL-SCH to the RE in $\Phi_1$, refer to the rule for mapping the UL-SCH to the RE in $\Phi_1$ described in step 4 in the foregoing mapping scheme 1.

Step 5: If an RE is reserved for the HARQ feedback information in step 1, map the HARQ feedback information to the reserved RE in step 1 according to a rule.

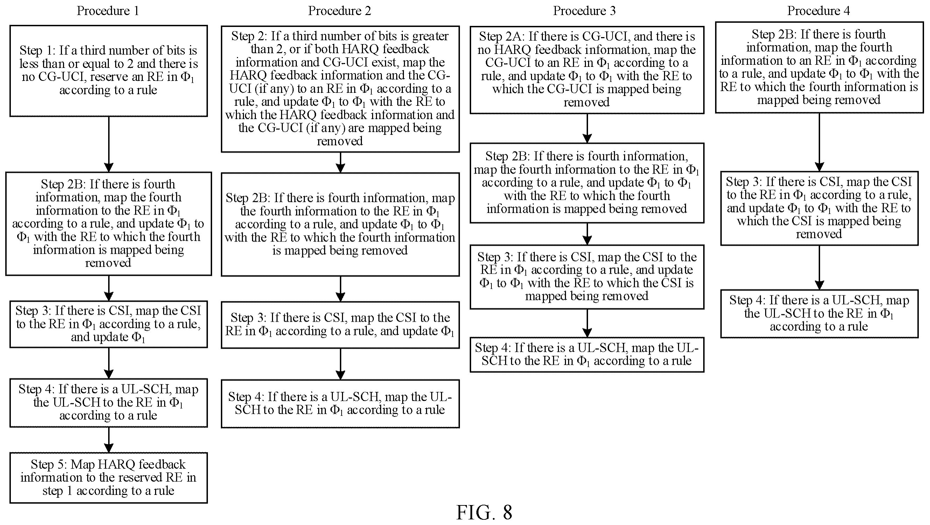

The foregoing steps may be expanded according to different conditions, as shown in FIG. 8 (from left to right, a procedure 1, a procedure 2, a procedure 3, and a procedure 4 are shown). It can be learned that, if the third number of bits is 0 bits, 1 bit, or 2 bits and there is no CG-UCI, the terminal punctures the PUSCH to transmit the HARQ feedback information. If the third number of bits is greater than 2 bits or there is the CG-UCI, the terminal transmits the HARQ feedback information through rate matching on the PUSCH. For UCI of another type, the terminal performs rate matching transmission on the PUSCH.

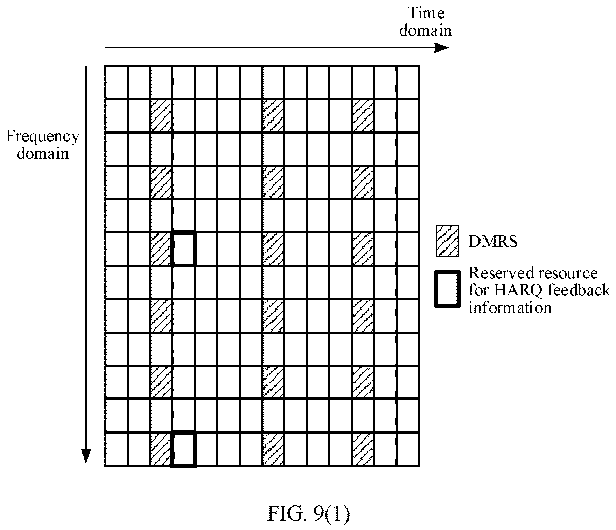

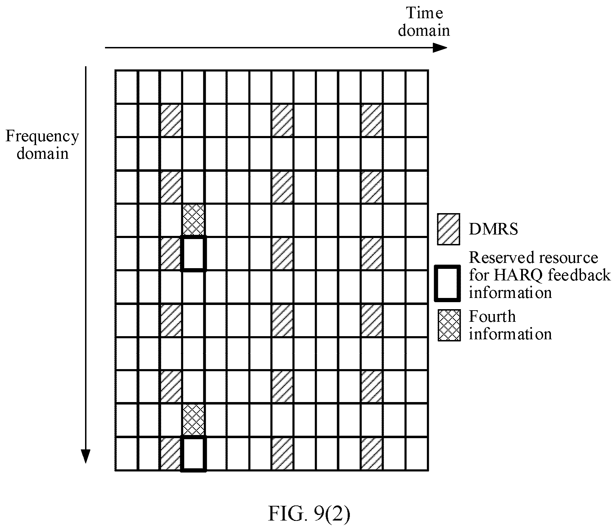

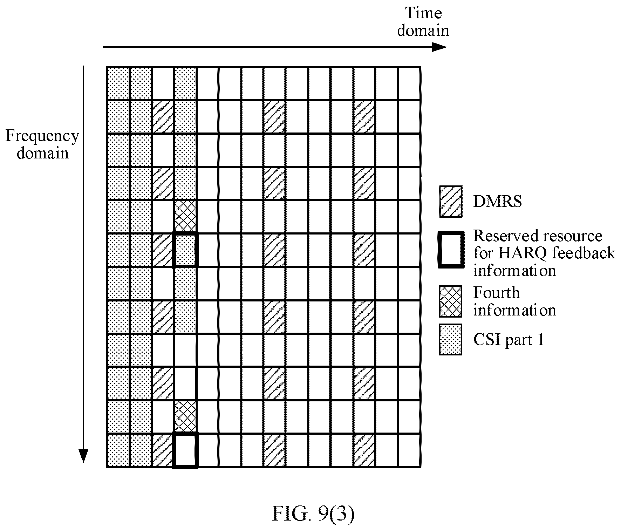

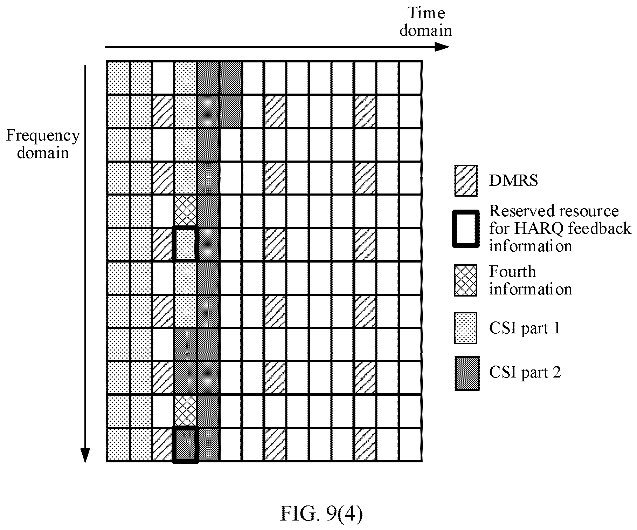

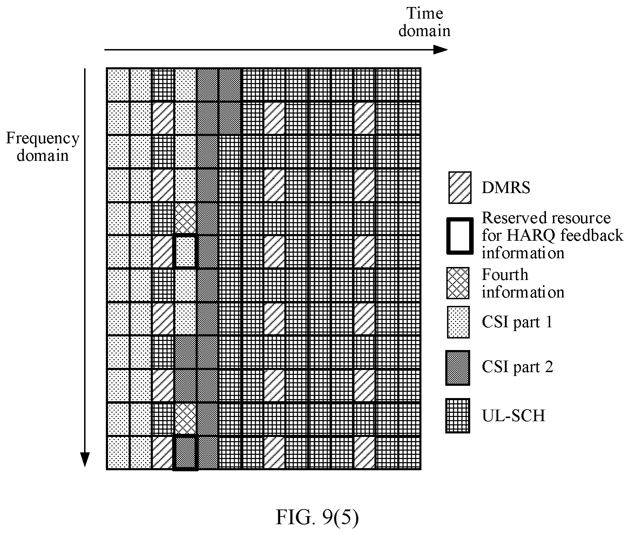

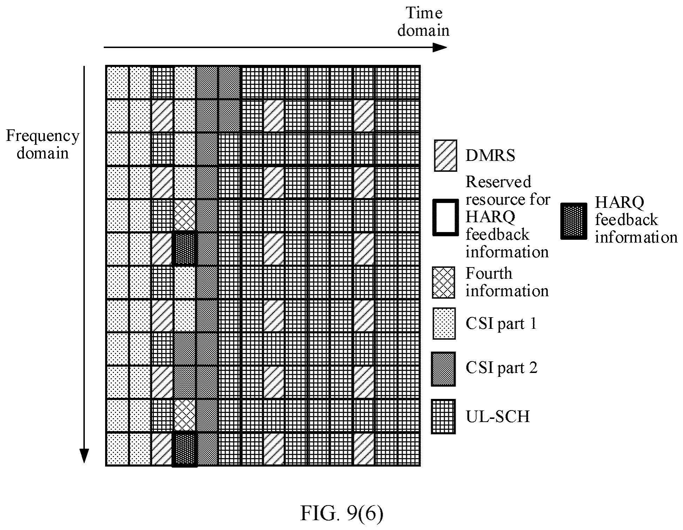

It can be learned that, the manner 1 of S702 corresponds to the procedure 1 (that is, a mapping procedure when the HARQ feedback information is less than or equal to 2 bits) in FIG. 8. The third resource is the reserved RE in step 1, and the fourth resource is the RE carrying the fourth information in step 2B. FIG. 9(1) to FIG. 9(6) are a diagram of a mapping rule corresponding to the procedure 1 in FIG. 8. FIG. 9(1), FIG. 9(2), FIG. 9(3), FIG. 9(4), FIG. 9(5), and FIG. 9(6) are diagrams of performing resource mapping on UCI of various types according to the procedure 1 in FIG. 8.

First, as shown in FIG. 9(1), starting from a 1st available symbol after a symbol used to transmit a 1st DMRS, a resource is reserved based on the third number of bits, to be a reserved area. In FIG. 9(1), that the HARQ feedback information is distributed on an RE of the symbol at an equal interval is used as an example. Then, as shown in FIG. 9(2), starting from a 1st available symbol after a symbol used to transmit a 1st DMRS, the fourth information is mapped. In FIG. 9(2), that a reserved area is not occupied when the fourth information is mapped, and the fourth information is distributed on an RE of the symbol at an equal interval is used as an example. Then, as shown in FIG. 9(3) and FIG. 9(4), starting from a 1st available symbol that is not used to transmit a DMRS, the CSI part 1 and the CSI part 2 are sequentially mapped. In FIG. 9(3) and FIG. 9(4), that the CSI part 1 and the CSI part 2 are continuously mapped to an RE of the symbol is used as an example. Next, as shown in FIG. 9(5), the UL-SCH is mapped starting from a 1st available symbol. Finally, as shown in FIG. 9(6), the HARQ feedback information is mapped to the reserved resource.

The manner 2 of S702 corresponds to the procedure 2 (that is, a mapping procedure when the HARQ feedback information is greater than 2 bits) in FIG. 8. The third resource is the RE carrying the HARQ feedback information in step 2, and the fourth resource is the RE carrying the fourth information in step 2B. FIG. 6c(1) to FIG. 6c(5) are a diagram of a mapping rule corresponding to the procedure 2 in FIG. 8. FIG. 6c(1), FIG. 6c(2), FIG. 6c(3), FIG. 6c(4), and FIG. 6c(5) are diagrams of performing resource mapping on UCI of various types according to the procedure 1 in FIG. 8.

In conclusion, according to the method provided in FIG. 7, the terminal does not map the fourth information to the third resource reserved for the HARQ feedback information. This increases a probability of complete transmission of the HARQ feedback information, thereby helping improve service stability, and further increases a probability of complete transmission of the third information, thereby helping improve resource utilization.

To increase the probability of complete transmission of the HARQ feedback information, thereby helping improve the service stability, and further increase a probability of complete transmission of the CSI, this application further provides a mapping scheme, that is, a mapping scheme 4. The following further describes the mapping scheme 4 in which the terminal sends the UCI to the access network device by using the resource of the PUSCH provided in this application.

Mapping scheme 4: The terminal performs resource mapping on the HARQ feedback information, the CSI, the XR-UCI, and a UL-SCH in descending order of priorities (which may be a default priority order, a priority order specified in a communication protocol, or a priority order indicated by the access network device). It may be understood that, in the mapping scheme 4, the HARQ feedback information has a highest priority, and a default priority of the CSI is higher than a priority of the XR-UCI. This increases a probability of complete transmission of the HARQ feedback information, thereby facilitating service stability, and further increases a probability of complete transmission of the CSI, thereby helping improve reliability of performing a service by the terminal.

The mapping scheme 4 includes the following steps:

Step 1: If the number of bits of the HARQ feedback information is less than or equal to 2, and there is no CG-UCI, reserve an RE (used to map the HARQ feedback information) in $\Phi_1$ according to a rule.

For the rule for reserving the RE in $\Phi_1$, refer to the rule for reserving the RE in $\Phi_1$ described in step 1B in the foregoing mapping scheme 2a.

Step 2: If the number of bits of the HARQ feedback information is greater than 2, or if both the HARQ feedback information and the CG-UCI exist, map the HARQ feedback information and the CG-UCI (if any) to the RE in $\Phi_1$ according to a rule, and update $\Phi_1$ to $\Phi_1$ with the RE to which the HARQ feedback information and the CG-UCI (if any) are mapped being removed.

For the rule for mapping the HARQ feedback information and the CG-UCI to the RE in $\Phi_1$, refer to the rule for mapping the HARQ feedback information and the CG-UCI to the RE in $\Phi_1$ described in step 2 in the foregoing mapping scheme 2a.

Step 2A: If there is the CG-UCI, and there is no HARQ feedback information, map the CG-UCI to the RE in $\Phi_1$ according to a rule, and update $\Phi_1$ to $\Phi_1$ with the RE to which the CG-UCI is mapped being removed.

For the rule for mapping the CG-UCI to the RE in $\Phi_1$, refer to the rule for mapping the CG-UCI to the RE in $\Phi_1$ described in step 2A in the foregoing mapping scheme 1.

Step 3: If there is the CSI, map the CSI to the RE in $\Phi_1$ according to a rule, and update $\Phi_1$ to $\Phi_1$ with the RE to which the CSI is mapped being removed.

For the rule for mapping the CSI to the RE in $\Phi_1$, refer to the rule for mapping the CSI to the RE in $\Phi_1$ described in step 3 in the foregoing mapping scheme 1.

Step 3A: If there is the XR-UCI, map the XR-UCI to the RE in $\Phi_1$ according to a rule, and update $\Phi_1$ to $\Phi_1$ with the RE to which the XR-UCI is mapped being removed.

The rule for mapping the XR-UCI to the RE in $\Phi_1$ is as follows:

(1) Mapping starts from a 1st OFDM symbol that is not used to transmit a DMRS, or mapping starts from a 1st available symbol. If a number of bits that can be carried by an allocated RE resource on a current symbol is less than a length of a generated sequence of the XR-UCI, it indicates that the allocated RE on the current symbol is insufficient. After the RE on the current symbol is fully occupied, mapping continues to be performed on a next symbol.

(2) If a number of REs required by UCI of this type (that is, the XR-UCI) exceeds half of a number of REs that can be used for transmitting the UCI on the OFDM symbol, the UCI of this type is continuously mapped to the REs; otherwise, the UCI is evenly mapped to the REs on the OFDM symbol, to achieve a diversity gain.

It should be noted that, in step 3A, the XR-UCI may occupy the reserved RE in step 1.

Step 4: If there is the UL-SCH, map the UL-SCH to the RE in $\Phi_1$ according to a rule.

For the rule for mapping the UL-SCH to the RE in $\Phi_1$, refer to the rule for mapping the UL-SCH to the RE in $\Phi_1$ described in step 4 in the foregoing mapping scheme 1.

Step 5: If an RE is reserved for the HARQ feedback information in step 1, map the HARQ feedback information to the reserved RE in step 1 according to a rule.

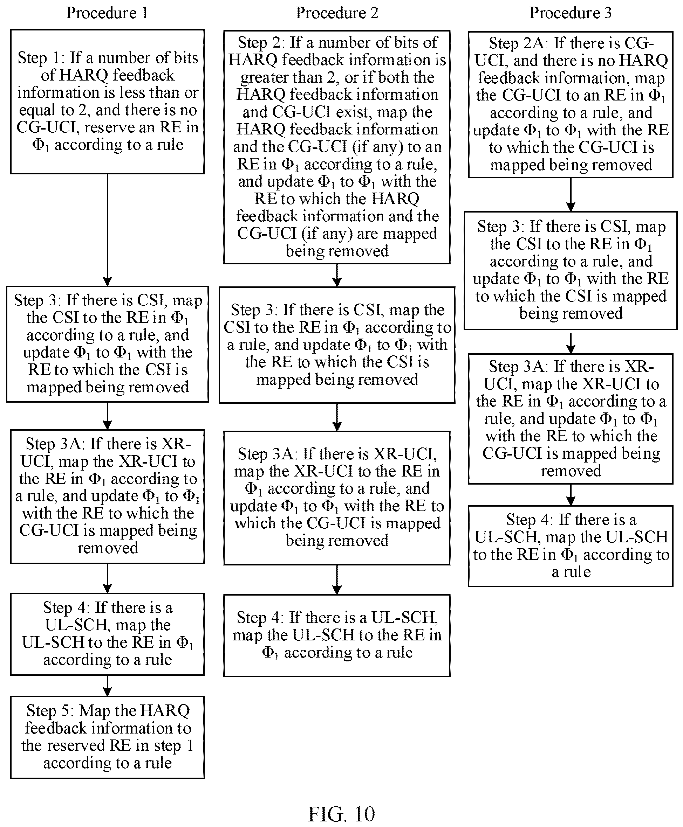

The foregoing steps may be expanded according to different conditions, as shown in FIG. 10 (from left to right, a procedure 1, a procedure 2, and a procedure 3 are shown). It can be learned that, if the number of bits of the HARQ feedback information is 0 bits, 1 bit, or 2 bits and there is no CG-UCI, the terminal punctures the PUSCH to transmit the HARQ feedback information. If the number of bits of the HARQ feedback information is greater than 2 bits or there is the CG-UCI, the terminal transmits the HARQ feedback information and the CG-UCI (if any) through rate matching on the PUSCH. For UCI of another type, the terminal performs rate matching transmission on the PUSCH.

For ease of understanding of the mapping scheme 4, the following uses the procedure 1 (that is, a corresponding mapping procedure when the HARQ feedback information is less than or equal to 2 bits) in FIG. 10 as an example for description.

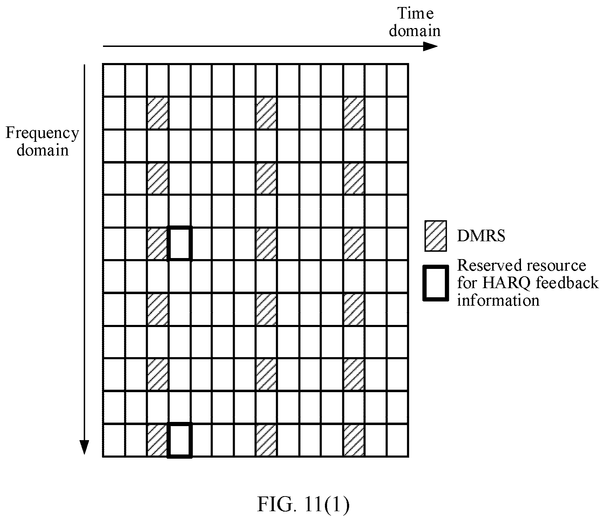

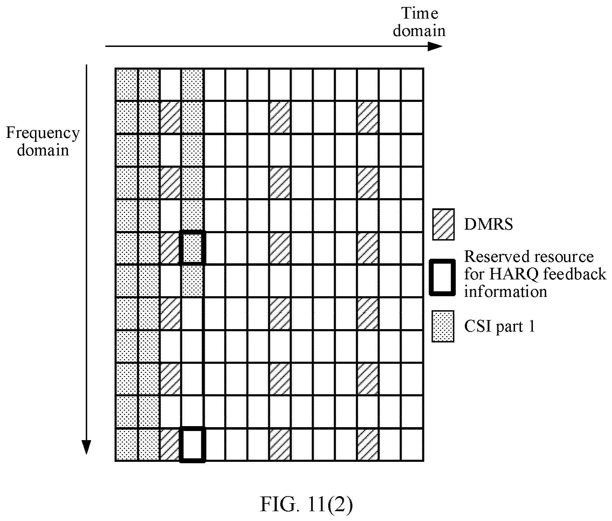

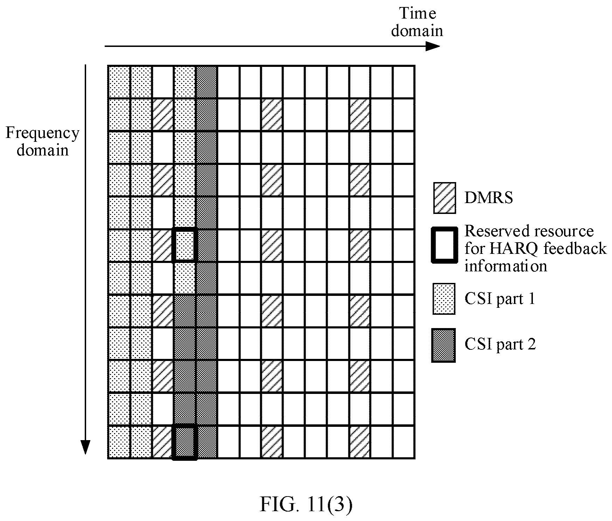

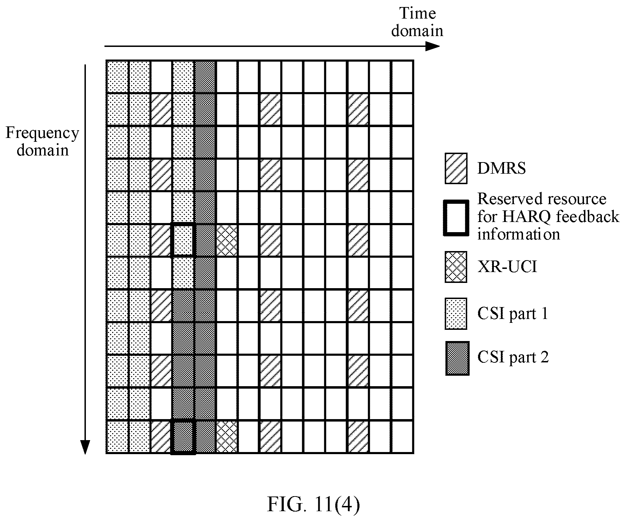

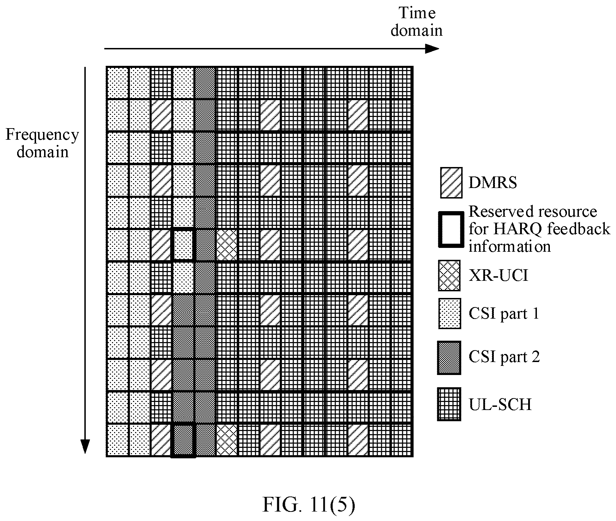

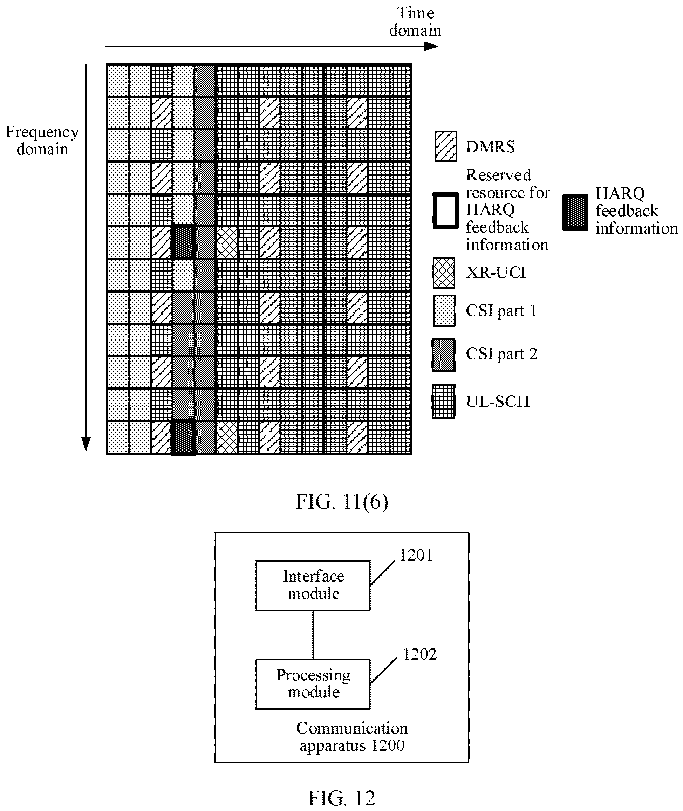

FIG. 11(1) to FIG. 11(6) are a diagram of a mapping rule corresponding to the procedure 1 in FIG. 10. FIG. 11(1), FIG. 11(2), FIG. 11(3), FIG. 11(4), FIG. 11(5), and FIG. 11(6) are diagrams of performing resource mapping on UCI of various types according to the procedure 1 in FIG. 10.

First, as shown in FIG. 11(1), starting from a 1st available symbol after a symbol used to transmit a 1st DMRS, a resource is reserved based on the number of bits of the HARQ feedback information, to be a reserved area. In FIG. 11(1), that the HARQ feedback information is distributed on an RE of the symbol at an equal interval is used as an example. Then, as shown in FIG. 11(2) and FIG. 11(3), starting from a 1st available symbol that is not used to transmit a DMRS, the CSI part 1 and the CSI part 2 are sequentially mapped. In FIG. 11(2) and FIG. 11(3), that the CSI part 1 and the CSI part 2 are continuously mapped to an RE of the symbol is used as an example. Then, as shown in FIG. 11(4), starting from a 1st available symbol after a symbol used to transmit a 1st DMRS, the XR-UCI is mapped. In FIG. 11(4), that the XR-UCI is distributed on an RE of the symbol at an equal interval is used as an example. Next, as shown in FIG. 11(5), the UL-SCH is mapped starting from a 1st available symbol. Finally, as shown in FIG. 11(6), the HARQ feedback information is mapped to the reserved resource.

To increase a probability of complete transmission of the second information, thereby helping improve resource utilization, this application further provides two mapping schemes: a mapping scheme 5 and a mapping scheme 6. The following further describes the mapping scheme 5 and the mapping scheme 6 in which the terminal sends the UCI to the access network device by using the resource of the PUSCH provided in this application.

Mapping scheme 5: The terminal performs resource mapping on the XR-UCI, the HARQ feedback information, and the CSI in a priority order (which may be a default priority order or a priority order that is of each information and that is indicated by the access network device). It may be understood that, in the mapping scheme 5, the XR-UCI has a highest priority, and a priority of the HARQ feedback information is higher than a priority of the CSI. This helps increase a probability of complete transmission of the HARQ feedback information, thereby facilitating service stability.

If the XR-UCI and the HARQ feedback information are configured to be jointly encoded, for steps of the mapping scheme 5, refer to the steps of the foregoing mapping scheme 1. Details are not described herein again. The following describes the mapping scheme 5 in which the XR-UCI and the HARQ feedback information are configured to be independently encoded. The mapping scheme 5 includes the following steps:

S1A: If a number of bits of the XR-UCI is less than or equal to 2, reserve an RE (used to map the second information) in $\Phi_1$ according to a rule.

For the rule for reserving the RE in $\Phi_1$, refer to the rule for reserving the RE in step 3A in the foregoing mapping scheme 2b.

S1B: If a number of bits of the XR-UCI is greater than 2, map the XR-UCI to the RE in $\Phi_1$ according to a rule, and update $\Phi_1$ to $\Phi_1$ with the RE to which the XR-UCI is mapped being removed.

For the rule for mapping the XR-UCI to the RE in $\Phi_1$, refer to the rule for mapping the XR-UCI to the RE in $\Phi_1$ in step 3B in the foregoing mapping scheme 2b or in step 2B in the foregoing mapping scheme 3.

S2A: If the number of bits of the HARQ feedback information is less than or equal to 2, reserve an RE (used to map the HARQ feedback information) in $\Phi_1$ according to a rule.

For the rule for reserving the RE in $\Phi_1$, refer to the rule for reserving the RE in $\Phi_1$ described in step 1A in the foregoing mapping scheme 2b.

S2B: If the number of bits of the HARQ feedback information is greater than 2, map the HARQ feedback information to the RE in $\Phi_1$ according to a rule, and update $\Phi_1$ to $\Phi_1$ with the RE to which the HARQ feedback information is mapped being removed.

For the rule for mapping the HARQ feedback information to the RE in $\Phi_1$, refer to the rule for mapping the HARQ feedback information to the RE in $\Phi_1$ in step 1B in the foregoing mapping scheme 2b, or in step 2 in the foregoing mapping scheme 3, or in step 2 in the foregoing mapping scheme 4.

S3: Map the CSI to the RE in $\Phi_1$ according to a rule, and update $\Phi_1$ to $\Phi_1$ with the RE to which the CSI is mapped being removed.

For the rule for mapping the CSI to the RE in $\Phi_1$, refer to the rule for mapping the CSI to the RE in $\Phi_1$ in step 4 in the foregoing mapping scheme 2b, or in step 3 in the foregoing mapping scheme 3, or in step 3 in the foregoing mapping scheme 4.

S4: Map the UL-SCH to the RE in $\Phi_1$ according to a rule.

For the rule for mapping the UL-SCH to the RE in $\Phi_1$, refer to the rule for mapping the UL-SCH to the RE in $\Phi_1$ described in step 4 in the foregoing mapping scheme 3 or in step 4 in the foregoing mapping scheme 4.

Mapping scheme 6: The terminal performs resource mapping on the XR-UCI, the CSI, and the HARQ feedback information in a priority order (which may be a default priority order or a priority order that is of each information and that is indicated by the access network device). It may be understood that, in the mapping scheme 6, the XR-UCI has a highest priority, and a priority of the CSI is higher than a priority of the HARQ feedback information. This helps increase a probability of complete transmission of the CSI, thereby facilitating service reliability.

The mapping scheme 6 includes the following steps:

S1A: If a number of bits of the XR-UCI is less than or equal to 2, reserve an RE (used to map the second information) in $\Phi_1$ according to a rule.

For the rule for reserving the RE in $\Phi_1$, refer to the rule for reserving the RE in step 3A in the foregoing mapping scheme 2b.

S1B: If a number of bits of the XR-UCI is greater than 2, map the XR-UCI to the RE in $\Phi_1$ according to a rule, and update $\Phi_1$ to $\Phi_1$ with the RE to which the XR-UCI is mapped being removed.

For the rule for mapping the XR-UCI to the RE in $\Phi_1$, refer to the rule for mapping the XR-UCI to the RE in $\Phi_1$ in step 3B in the foregoing mapping scheme 2b or in step 2B in the foregoing mapping scheme 3.

S2: Map the CSI to the RE in $\Phi_1$ according to a rule, and update $\Phi_1$ to $\Phi_1$ with the RE to which the CSI is mapped being removed.

For the rule for mapping the CSI to the RE in $\Phi_1$, refer to the rule for mapping the CSI to the RE in $\Phi_1$ in step 3 in the foregoing mapping scheme 3 or in step 3 in the foregoing mapping scheme 4.

S3: Map the HARQ feedback information to the RE in $\Phi_1$ according to a rule, and update $\Phi_1$ to $\Phi_1$ with the RE to which the HARQ feedback information is mapped being removed.

For the rule for mapping the HARQ feedback information to the RE in $\Phi_1$, refer to the rule for mapping the HARQ feedback information to the RE in $\Phi_1$ in step 2 in the foregoing mapping scheme 3 or in step 2 in the foregoing mapping scheme 4.

S4: Map the UL-SCH to the RE in $\Phi_1$ according to a rule.

For the rule for mapping the UL-SCH to the RE in $\Phi_1$, refer to the rule for mapping the UL-SCH to the RE in $\Phi_1$ described in step 4 in the foregoing mapping scheme 3 or in the foregoing mapping scheme 4.

To increase a probability of complete transmission of the CSI, thereby helping improve resource utilization, this application further provides two mapping schemes: a mapping scheme 7 and a mapping scheme 8. The following further describes the mapping scheme 7 and the mapping scheme 8 in which the terminal sends the UCI to the access network device by using the resource of the PUSCH provided in this application.

Mapping scheme 7: The terminal performs resource mapping on the CSI, the XR-UCI, and the HARQ feedback information in a priority order (which may be a default priority order or a priority order that is of each information and that is indicated by the access network device). It may be understood that, in the mapping scheme 7, the CSI has a highest priority, and a priority of the XR-UCI is higher than a priority of the HARQ feedback information. This helps increase a probability of complete transmission of the XR-UCI, thereby helping improve resource utilization.

The mapping scheme 7 includes the following steps:

S1: Map the CSI to the RE in $\Phi_1$ according to a rule, and update $\Phi_1$ to $\Phi_1$ with the RE to which the CSI is mapped being removed.

For the rule for mapping the CSI to the RE in $\Phi_1$, refer to the rule for mapping the CSI to the RE in $\Phi_1$ in step 3 in the foregoing mapping scheme 3 or in step 3 in the foregoing mapping scheme 4.

S2: Map the XR-UCI to the RE in $\Phi_1$ according to a rule, and update $\Phi_1$ to $\Phi_1$ with the RE to which the XR-UCI is mapped being removed.

For the rule for mapping the XR-UCI to the RE in $\Phi_1$, refer to the rule for mapping the XR-UCI to the RE in $\Phi_1$ in step 2B in the foregoing mapping scheme 3 or in step 3A in the foregoing mapping scheme 4.

S3: Map the HARQ feedback information to the RE in $\Phi_1$ according to a rule, and update $\Phi_1$ to $\Phi_1$ with the RE to which the HARQ feedback information is mapped being removed.

For the rule for mapping the HARQ feedback information to the RE in $\Phi_1$, refer to the rule for mapping the HARQ feedback information to the RE in $\Phi_1$ in step 2 in the foregoing mapping scheme 3 or in step 2 in the foregoing mapping scheme 4.

S4: Map the UL-SCH to the RE in $\Phi_1$ according to a rule.

For the rule for mapping the UL-SCH to the RE in $\Phi_1$, refer to the rule for mapping the UL-SCH to the RE in $\Phi_1$ described in step 4 in the foregoing mapping scheme 3 or in the foregoing mapping scheme 4.

Mapping scheme 8: The terminal performs resource mapping on the CSI, the HARQ feedback information, and the XR-UCI in a priority order (which may be a default priority order or a priority order that is of each information and that is indicated by the access network device). It may be understood that, in the mapping scheme 8, the CSI has a highest priority, and a priority of the HARQ feedback information is higher than a priority of the XR-UCI. This helps increase a probability of complete transmission of the HARQ feedback information, thereby facilitating service stability.

The mapping scheme 8 includes the following steps:

S1: If the CSI part 1 is transmitted on the PUSCH, map the CSI part 1 to the RE in $\Phi_1$ according to a rule, and update $\Phi_1$ to $\Phi_1$ with the RE to which the CSI part 1 is mapped being removed.

For the rule for mapping the CSI part 1 to the RE in $\Phi_1$, refer to the rule for mapping the CSI to the RE in $\Phi_1$ in step 3 in the foregoing mapping scheme 3 or in step 3 in the foregoing mapping scheme 4.

S2: After S1 is performed, map the HARQ feedback information to the RE in $\Phi_1$ according to a rule, and update $\Phi_1$ to $\Phi_1$ with the RE to which the HARQ feedback information is mapped being removed.

For the rule for mapping the HARQ feedback information to the RE in $\Phi_1$, refer to the rule for mapping the CSI part 2 to the RE in $\Phi_1$ in the foregoing.

S2A: If no CSI part 1 is transmitted on the PUSCH, map the HARQ feedback information to the RE in $\Phi_1$ according to a rule, and update $\Phi_1$ to $\Phi_1$ with the RE to which the HARQ feedback information is mapped being removed.

For the rule for mapping the HARQ feedback information to the RE in $\Phi_1$, refer to the rule for mapping the CSI part 1 to the RE in $\Phi_1$ in the foregoing.

S3: After S2 or S2A is performed, map the XR-UCI to the RE in $\Phi_1$ according to a rule, and update $\Phi_1$ to $\Phi_1$ with the RE to which the XR-UCI is mapped being removed.

For the rule for mapping the XR-UCI to the RE in $\Phi_1$, refer to the rule for mapping the XR-UCI to the RE in $\Phi_1$ in step 2B in the foregoing mapping scheme 5 or in step 3A in the foregoing mapping scheme 4.

S4: Map the UL-SCH to the RE in $\Phi_1$ according to a rule.

For the rule for mapping the UL-SCH to the RE in $\Phi_1$, refer to the rule for mapping the UL-SCH to the RE in $\Phi_1$ described in step 4 in the foregoing mapping scheme 3 or in the foregoing mapping scheme 4.

In a possible implementation, the terminal receives a second parameter from the access network device, where the second parameter indicates whether the UCI includes the XR-UCI (that is, may be understood as whether the UCI has a function of indicating a PUSCH resource used or unused in the CG periodicity time period). If the second parameter is not configured (or is configured as 0), it indicates that the UCI does not include the XR-UCI; or if the second parameter is configured (or is configured as 1), it indicates that the UCI includes the XR-UCI. When the UCI includes the XR-UCI, the terminal may perform resource mapping according to the foregoing mapping scheme 1 to mapping scheme 8. When the UCI does not include the XR-UCI, it is considered that a number of resources occupied by a bit sequence corresponding to the XR-UCI is 0, and resource mapping is performed according to the foregoing mapping scheme 1 to mapping scheme 8.

The second parameter may be understood as a parameter related to the XR-UCI, and the second parameter may be carried in an RRC configuration message, or may be carried in DCI. In a possible implementation, the second parameter is an expansion factor (for example, the second parameter is betaoffsetCGskip-UCI) sent for the XR-UCI on the PUSCH. The second parameter is used to control a bit rate offset of the XR-UCI relative to uplink data (for example, as a value of the second parameter increases, a lower bit rate of the XR-UCI indicates better reliability, and overheads occupied by the XR-UCI are larger). In another possible implementation, the second parameter is a parameter newly added to the RRC configuration message or the DCI (for example, the second parameter is referred to as cg-unusedpusch), and the second parameter indicates whether the XR-UCI exists.

Generally, the CG-UCI is used only on an unlicensed frequency band (which may be understood as that UCI generated on a licensed frequency band does not include the CG-UCI). In view of this, when the second parameter is configured, this application further provides two application scenarios: an application scenario 1 in which the XR-UCI can be used only on a licensed frequency band; and an application scenario 2 in which the XR-UCI can be used on both a licensed frequency band and an unlicensed frequency band. In a possible implementation, the terminal receives a third parameter from the access network device, where the third parameter indicates whether the XR-UCI can be used on the unlicensed frequency band (for example, the third parameter may be cg-retransmissionTimer). In a possible implementation, the third parameter is a parameter used on the unlicensed frequency band, and the third parameter is not configured (or does not exist) on the licensed frequency band. In other words, when the second parameter is configured (that is, the XR-UCI exists), but the third parameter is not configured on the unlicensed frequency band, the XR-UCI cannot be used on the unlicensed frequency band, and the XR-UCI can be used only on the licensed frequency band (corresponding to the application scenario 1). When the second parameter is configured (that is, the XR-UCI exists), and the third parameter is configured on the unlicensed frequency band, the XR-UCI can be used on both the unlicensed frequency band and the licensed frequency band (corresponding to the application scenario 2).

The following describes existence forms of the XR-UCI with reference to the two application scenarios.

In the application scenario 1, the XR-UCI can be used only on the licensed frequency band. In this case, there are the following existence forms: Existence form ①: The XR-UCI may be one piece of information other than the CG-UCI. Existence form ②: An indication field is newly added to an indication field included in the CG-UCI, where the newly added indication field indicates the PUSCH resource used or unused in the CG periodicity time period. In other words, the newly added indication field in the CG-UCI is used on the licensed frequency band to indicate the PUSCH resource used or unused in the CG periodicity time period. Existence form ③: An indication field in the CG-UCI is multiplexed (for ease of description, collectively referred to as a multiplexed indication field in the following) on the licensed frequency band to indicate the PUSCH resource used or unused in the CG periodicity time period. The multiplexed indication field in the CG-UCI may be an indication field indicating at least one of a HARQ process, a redundancy version, new data transmission or retransmission, or channel occupancy time. In other words, when the multiplexed indication field in the CG-UCI is used on the licensed frequency band, the multiplexed indication field in the CG-UCI indicates only the PUSCH resource used or unused in the CG periodicity time period. For example, when the multiplexed indication field in the CG-UCI is an indication field indicating the redundancy version, a function of the multiplexed indication field on the licensed frequency band is indicating the PUSCH resource used or unused in the CG periodicity time period, and a function of the multiplexed indication field on the unlicensed frequency band is the indication field indicating the redundancy version.

For example, the CG-UCI used on the unlicensed frequency band includes an indication field 1 to an indication field 4. On the unlicensed frequency band, the indication field 1 to the indication field 4 of the CG-UCI respectively indicate a HARQ process, a redundancy version, new data transmission or retransmission, or channel occupancy time. If the indication field in the CG-UCI is not used for the XR-UCI, the XR-UCI is one piece of information other than the CG-UCI (corresponding to the foregoing existence form ①). If an indication field 5 is newly added to the CG-UCI, and the indication field 5 indicates, on the licensed frequency band, the PUSCH resource used or unused in the CG periodicity time period, the XR-UCI includes the indication field 5 in the CG-UCI (corresponding to the foregoing existence form ②). If a function is newly added to the indication field 4 in the CG-UCI, a function of the indication field 4 on the licensed frequency band is different from an original function of the indication field 4 on the unlicensed frequency band (that is, a function indicating the channel occupancy time), and the function of the indication field 4 on the licensed frequency band indicates the PUSCH resource used or unused in the CG periodicity time period, the XR-UCI includes the indication field 4 in the CG-UCI (corresponding to the foregoing existence form ③).

In the application scenario 2, the XR-UCI can be used on both the licensed frequency band and the unlicensed frequency band. In this case, there are the following existence forms: Existence form ②: The XR-UCI may be another piece of information independent of the CG-UCI. Existence form ②: An indication field is newly added to an indication field in the CG-UCI, where the newly added indication field indicates the PUSCH resource used or unused in the CG periodicity time period. In other words, the newly added indication field in the CG-UCI may be used on both the unlicensed frequency band and the licensed frequency band to indicate the PUSCH resource used or unused in the CG periodicity time period.

It should be noted that, in the foregoing existence form ② or existence form ③, in addition to the indication field indicating the PUSCH resource used or unused in the CG periodicity time period, the XR-UCI may further include the indication field that is in the CG-UCI and that indicates at least one of the HARQ process, the redundancy version, the new data transmission or retransmission, or the channel occupancy time. Alternatively, the XR-UCI may not include the indication field that is in the CG-UCI and that indicates the HARQ process, the redundancy version, the new data transmission or retransmission, or the channel occupancy time. This is not specifically limited in this application. When the XR-UCI further includes the indication field that is in the CG-UCI and that indicates at least one of the HARQ process, the redundancy version, the new data transmission or retransmission, or the channel occupancy time, the XR-UCI further indicates at least one of the HARQ process, the redundancy version, the new data transmission or retransmission, or the channel occupancy time.

This application provides a communication apparatus. The communication apparatus may be configured to implement functions of the foregoing terminal or access network device. The communication apparatus may be a terminal or an access network device. The communication apparatus includes modules or units that are in one-to-one correspondence with the methods/operations/steps/actions performed by the terminal or the access network device in the foregoing method embodiments. The unit may be implemented by a hardware circuit, software, or a combination of a hardware circuit and software. FIG. 12 is a diagram of a structure of a communication apparatus 1200 according to an embodiment of this application. The communication apparatus 1200 may include an interface module 1201 and a processing module 1202. Specifically, the processing module 1202 is configured to process signaling and/or data. The signaling and/or data may be data received by the interface module 1201, and the processed signaling and/or data may also be sent by the interface module 1201.

In an implementation, when the communication apparatus 1200 is the terminal, the communication apparatus 1200 includes:

a processing module 1202, configured to generate a first bit sequence and a second bit sequence, where the first bit sequence corresponds to first information, the first information is hybrid automatic repeat request HARQ feedback information, the second bit sequence corresponds to second information, and the second information indicates a configured grant CG resource used or unused in a CG periodicity time period; and
an interface module 1201, configured to send the first information by using a first resource of a physical uplink shared channel PUSCH, where a number of first resources is related to a number of bits included in the second bit sequence.

In a possible implementation, the interface module 1201 is further configured to send the second information by using the first resource.

In a possible implementation, the first bit sequence and the second bit sequence are jointly encoded; or the first bit sequence and the second bit sequence are independently encoded.

In a possible implementation, the interface module 1201 is further configured to send the second information by using a second resource of the PUSCH, where a number of second resources is related to the number of bits included in the second bit sequence.

In an implementation, for specific implementations of the interface module 1201 and the processing module 1202, refer to specific implementation steps of the terminal in FIG. 2. Details are not described herein again.

In an implementation, when the communication apparatus shown in FIG. 12 is the terminal, the communication apparatus includes:

a processing module 1202, configured to generate a third bit sequence and a fourth bit sequence, where the third bit sequence corresponds to third information, the third information is hybrid automatic repeat request HARQ feedback information, the fourth bit sequence corresponds to fourth information, and the fourth information indicates a configured grant CG resource used or unused in a CG periodicity time period; and
an interface module 1201, configured to send the third information by using a third resource of a physical uplink shared channel PUSCH, where a number of third resources is related to a number of bits included in the third bit sequence, where
the processing module 1202 is further configured to map the fourth information to a fourth resource of the PUSCH other than the third resource; and
the interface module 1201 is further configured to send the fourth information by using the fourth resource.

In a possible implementation, a number of fourth resources is related to a number of bits included in the fourth bit sequence.

In an implementation, for specific implementations of the interface module 1201 and the processing module 1202, refer to specific implementation steps of the access network device in FIG. 7. Details are not described herein again.

In an implementation, when the communication apparatus shown in FIG. 12 is the access network device, the communication apparatus includes:
an interface module 1201, configured to receive first information by using a first resource of a physical uplink shared channel PUSCH, where a number of first resources is related to a number of bits included in a second bit sequence, the first information is hybrid automatic repeat request HARQ feedback information, the second bit sequence corresponds to second information, and the second information indicates a configured grant CG resource used or unused in a CG periodicity time period.

In a possible implementation, the interface module 1201 is further configured to receive the second information by using the first resource.

In a possible implementation, the first information corresponds to a first bit sequence, and the first bit sequence and the second bit sequence are jointly encoded; or the first bit sequence and the second bit sequence are independently encoded.

In a possible implementation, the interface module 1201 is further configured to receive the second information by using a second resource of the PUSCH, where a number of second resources is related to the number of bits included in the second bit sequence.

In an implementation, for specific implementations of the interface module 1201, refer to specific implementation steps of the access network device in FIG. 2. Details are not described herein again.

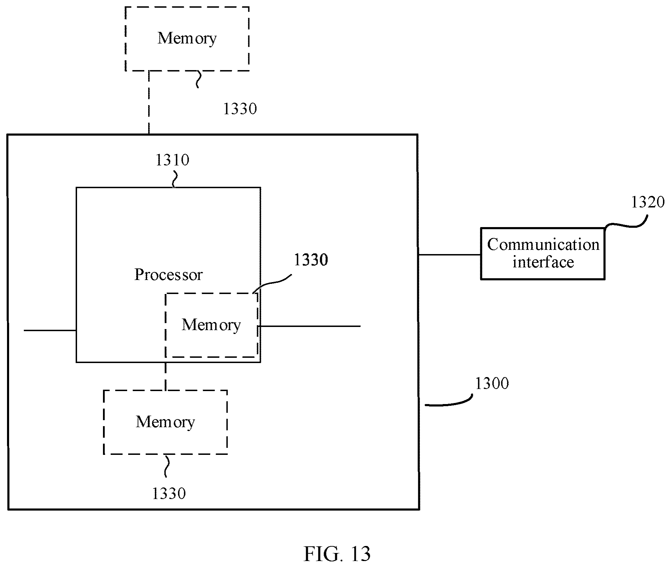

FIG. 13 shows a communication apparatus 1300 according to an embodiment of this application. The communication apparatus 1300 is configured to implement functions of the foregoing terminal or access network device. The apparatus may be a communication device or an apparatus used in the communication device, and the communication device may be a terminal or an access network device. The apparatus used in the communication device may be a chip system or a chip in the communication device. The chip system may include a chip, or may include a chip and another discrete component.

The communication apparatus 1300 includes at least one processor 1310, configured to implement a processing function of a device (for example, the access network device or the terminal) in the methods provided in embodiments of this application. The communication apparatus 1300 may further include a communication interface 1320, configured to implement receiving and sending operations of the device (for example, the access network device or the terminal) in the methods provided in embodiments of this application. In this embodiment of this application, the communication interface may be a transceiver, a circuit, a bus, a module, or another type of communication interface, and is configured to communicate with another device through a transmission medium. For example, the communication interface 1320 is used by an apparatus in the communication apparatus 1300 to communicate with the another device. The processor 1310 receives and sends data through the communication interface 1320, and is configured to implement the methods in the foregoing method embodiments.

The communication apparatus 1300 may further include at least one memory 1330, configured to store program instructions and/or data. The memory 1330 is coupled to the processor 1310. The coupling in this embodiment of this application may be an indirect coupling or a communication connection between apparatuses, units, or modules in an electrical form, a mechanical form, or another form, and is used for information exchange between the apparatuses, the units, or the modules. The processor 1310 may cooperate with the memory 1330. The processor 1310 may execute the program instructions stored in the memory 1330. At least one of the at least one memory may be included in the processor.

A specific connection medium between the communication interface 1320, the processor 1310, and the memory 1330 is not limited in embodiments of this application. In this embodiment of this application, the memory 1330, the processor 1310, and the communication interface 1320 are connected through a bus in FIG. 13, and the bus is represented by a thick line in FIG. 13. A manner of connection between other components is merely an example for description, and is not limited thereto. The bus may be classified into an address bus, a data bus, a control bus, and the like. For ease of representation, only one thick line is used for representation in FIG. 13, but this does not mean that there is only one bus or only one type of bus.

When the communication apparatus 1300 is specifically the apparatus used in the device (for example, the access network device or the terminal), for example, when the communication apparatus 1300 is specifically the chip or the chip system, the communication interface 1320 may output or receive a baseband signal. When the communication apparatus 1300 is specifically the device (for example, the access network device or the terminal), the communication interface 1320 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed and completed by a hardware processor, or may be performed and completed by using a combination of hardware in the processor and a software module.

It should be noted that the communication interface 1320 may be configured to perform a function of the interface module 1201, and the processor 1310 may be configured to perform a function of the processing module 1202. Details are not described herein again.

When the communication apparatus is a chip used in the terminal, the chip in the terminal implements functions of the terminal in the foregoing method embodiments. The chip in the terminal receives information from another network element; or the chip in the terminal sends information to another network element.

When the communication apparatus is a chip used in the access network device, the chip in the access network device implements functions of the access network device in the foregoing method embodiments. The chip in the access network device receives information from another network element; or the chip in the access network device sends information to another network element.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in the ASIC. In addition, the ASIC may be located in the access network device or the terminal. Certainly, the processor and the storage medium may alternatively exist in the terminal or the access network device as discrete components.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are performed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium that can be accessed by a computer, or a data storage device, such as a server, integrating one or more usable media. The usable medium may be a magnetic medium, for example, a floppy disk, a hard disk drive, or a magnetic tape; may be an optical medium, for example, a DVD; or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, various numbers in embodiments of this application are merely used for differentiation for ease of description, and are not used to limit the scope of embodiments of this application. Sequence numbers of the foregoing processes do not mean an execution order, and the execution order of the processes should be determined based on functions and internal logic of the processes.

An embodiment of this application further provides a computer-readable storage medium. The computer-readable storage medium stores computer-executable instructions, and when the computer-executable instructions are executed, the methods performed by the terminal or the access network device in the foregoing method embodiments are implemented.

An embodiment of this application further provides a computer program product. The computer program product includes a computer program, and when the computer program is executed, the methods performed by the terminal or the access network device in the foregoing method embodiments are implemented.

An embodiment of this application further provides a communication system. The communication system includes a terminal or an access network device. The terminal is configured to perform the methods performed by the terminal in the foregoing method embodiments. The access network device is configured to perform the methods performed by the access network device in the foregoing method embodiments.

It should be noted that, for brief description, the foregoing method embodiments are all represented as a series of action combinations. However, a person skilled in the art should appreciate that this application is not limited to the described order of the actions, because according to this application, some steps may be performed in other orders or simultaneously. It should be further appreciated by a person skilled in the art that embodiments described in this specification all belong to preferred embodiments, and the involved actions and modules are not necessarily required by this application.

Descriptions of embodiments provided in this application may refer to each other, and the descriptions of embodiments have respective focuses. For a part that is not described in detail in an embodiment, refer to related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some or all technical features thereof, without departing from the scope of the technical solutions of embodiments of this application.

**Claims**

1.   A communication method, wherein the method comprises:

generating a first bit sequence and a second bit sequence, wherein the first bit sequence corresponds to first information, the first information is hybrid automatic repeat request HARQ feedback information, the second bit sequence corresponds to second information, and the second information indicates a configured grant CG resource used or unused in a CG periodicity time period; and
sending the first information by using a first resource of a physical uplink shared channel PUSCH, wherein a number of first resources is related to a number of bits comprised in the second bit sequence.

2.   The method according to claim 1, wherein the method further comprises:
sending the second information by using the first resource.

3.   The method according to claim 2, wherein the first bit sequence and the second bit sequence are jointly encoded; or the first bit sequence and the second bit sequence are independently encoded.

4.   The method according to claim 1, wherein the method further comprises:
sending the second information by using a second resource of the PUSCH, wherein a number of second resources is related to the number of bits comprised in the second bit sequence.

5.   A communication method, wherein the method comprises:

generating a third bit sequence and a fourth bit sequence, wherein the third bit sequence corresponds to third information, the third information is hybrid automatic repeat request HARQ feedback information, the fourth bit sequence corresponds to fourth information, and the fourth information indicates a configured grant CG resource used or unused in a CG periodicity time period;
sending the third information by using a third resource of a physical uplink shared channel PUSCH, wherein a number of third resources is related to a number of bits comprised in the third bit sequence;
mapping the fourth information to a fourth resource of the PUSCH other than the third resource; and
sending the fourth information by using the fourth resource.

6.   The method according to claim 5, wherein a number of fourth resources is related to a number of bits comprised in the fourth bit sequence.

7.   A communication method, wherein the method comprises:
receiving first information by using a first resource of a physical uplink shared channel PUSCH, wherein a number of first resources is related to a number of bits comprised in a second bit sequence, the first information is hybrid automatic repeat request HARQ feedback information, the second bit sequence corresponds to second information, and the second information indicates a configured grant CG resource used or unused in a CG periodicity time period.

8.   The method according to claim 7, wherein the method further comprises:
receiving the second information by using the first resource.

9.   The method according to claim 8, wherein the first information corresponds to a first bit sequence, and the first bit sequence and the second bit sequence are jointly encoded; or the first bit sequence and the second bit sequence are independently encoded.

10. The method according to claim 7, wherein the method further comprises:
receiving the second information by using a second resource of the PUSCH, wherein a number of second resources is related to the number of bits comprised in the second bit sequence.

11. A communication apparatus, wherein the communication apparatus comprises:

a processing module, configured to generate a first bit sequence and a second bit sequence, wherein the first bit sequence corresponds to first information, the first information is hybrid automatic repeat request HARQ feedback information, the second bit sequence corresponds to second information, and the second information indicates a configured grant CG resource used or unused in a CG periodicity time period; and
an interface module, configured to send the first information by using a first resource of a physical uplink shared channel PUSCH, wherein a number of first resources is related to a number of bits comprised in the second bit sequence.

12. The apparatus according to claim 11, wherein
the interface module is further configured to send the second information by using the first resource.

13. The apparatus according to claim 12, wherein the first bit sequence and the second bit sequence are jointly encoded; or the first bit sequence and the second bit sequence are independently encoded.

14. The apparatus according to claim 11, wherein
the interface module is further configured to send the second information by using a second resource of the PUSCH, wherein a number of second resources is related to the number of bits comprised in the second bit sequence.

15. A communication apparatus, wherein the communication apparatus comprises:

a processing module, configured to generate a third bit sequence and a fourth bit sequence, wherein the third bit sequence corresponds to third information, the third information is hybrid automatic repeat request HARQ feedback information, the fourth bit sequence corresponds to fourth information, and the fourth information indicates a configured grant CG resource used or unused in a CG periodicity time period; and
an interface module, configured to send the third information by using a third resource of a physical uplink shared channel PUSCH, wherein a number of third resources is related to a number of bits comprised in the third bit sequence, wherein
the processing module is further configured to map the fourth information to a fourth resource of the PUSCH other than the third resource; and
the interface module is further configured to send the fourth information by using the fourth resource.

16. The apparatus according to claim 15, wherein a number of fourth resources is related to a number of bits comprised in the fourth bit sequence.

17. A communication apparatus, wherein the communication apparatus comprises:
an interface module, configured to receive first information by using a first resource of a physical uplink shared channel PUSCH, wherein a number of first resources is related to a number of bits comprised in a second bit sequence, the first information is hybrid automatic repeat request HARQ feedback information, the second bit sequence corresponds to second information, and the second information indicates a configured grant CG resource used or unused in a CG periodicity time period.

18. The apparatus according to claim 17, wherein
the interface module is further configured to receive the second information by using the first resource.

19. The apparatus according to claim 18, wherein the first information corresponds to a first bit sequence, and the first bit sequence and the second bit sequence are jointly encoded; or the first bit sequence and the second bit sequence are independently encoded.

20. The apparatus according to claim 17, wherein

the interface module is further configured to receive the second information by using a second resource of the PUSCH, wherein a number of second resources is related to the number of bits comprised in the second bit sequence.

21. A communication apparatus, comprising a processor, wherein the processor is coupled to a memory, the memory is configured to store a program or instructions, and when the program or the instructions are executed by the processor, the apparatus is enabled to perform the method according to any one of claims 1 to 4, or perform the method according to either of claims 5 and 6.

22. A communication apparatus, comprising a processor, wherein the processor is coupled to a memory, the memory is configured to store a program or instructions, and when the program or the instructions are executed by the processor, the apparatus is enabled to perform the method according to any one of claims 7 to 10.

23. A computer-readable storage medium, wherein the storage medium stores a computer program or instructions, and when the computer program or the instructions are executed, the method according to any one of claims 1 to 4 is implemented, or the method according to either of claims 5 and 6 is implemented, or the method according to any one of claims 7 to 10 is implemented.

24. A computer program product, comprising computer program code, wherein when the computer program code is run, the method according to any one of claims 1 to 4 is implemented, or the method according to either of claims 5 and 6 is implemented, or the method according to any one of claims 7 to 10 is implemented.

25. A communication apparatus, comprising a module configured to perform the method according to any one of claims 1 to 4, or comprising a module configured to perform the method according to either of claims 5 and 6.

26. A communication apparatus, comprising a module configured to perform the method according to any one of claims 7 to 10.

27. A communication system, comprising the apparatus according to claim 21 or 25 and the apparatus according to claim 22 or 26.

FIG. 1

FIG. 2

Procedure 1

Step 1: If a sum of a first number of bits and a second number of bits is less than or equal to 2, and there is no CG-UCI, reserve an RE in $\Phi_1$ according to a rule

↓

Step 3: If there is CSI, map the CSI to the RE in $\Phi_1$ according to a rule, and update $\Phi_1$

↓

Step 4: If there is a UL-SCH, map the UL-SCH to the RE in $\Phi_1$ according to a rule

↓

Step 5: Map HARQ feedback information and second information to the reserved RE in step 1 according to a rule

Procedure 2

Step 2: If a sum of a first number of bits and a second number of bits is greater than 2, or if HARQ feedback information, second information, and CG-UCI all exist, map the HARQ feedback information, the second information, and the CG-UCI (if any) to an RE in $\Phi_1$ according to a rule, and update $\Phi_1$

↓

Step 3: If there is CSI, map the CSI to the RE in $\Phi_1$ according to a rule, and update $\Phi_1$

↓

Step 4: If there is a UL-SCH, map the UL-SCH to the RE in $\Phi_1$ according to a rule

Procedure 3

Step 2A: If there is CG-UCI, and there is no HARQ feedback information or second information, map the CG-UCI to an RE in $\Phi_1$ according to a rule, and update $\Phi_1$ to $\Phi_1$ with the RE to which the CG-UCI is mapped being removed

↓

Step 3: If there is CSI, map the CSI to the RE in $\Phi_1$ according to a rule, and update $\Phi_1$

↓

Step 4: If there is a UL-SCH, map the UL-SCH to the RE in $\Phi_1$ according to a rule

FIG. 3

FIG. 4a(1)

FIG. 4a(2)

FIG. 4a(3)

FIG. 4a(4)

FIG. 4a(5)

FIG. 4b(1)

Time domain

Frequency domain

DMRS

HARQ feedback information and second information

CSI part 1

FIG. 4b(2)

FIG. 4b(3)

Time domain

Frequency domain

DMRS

HARQ feedback information and second information

CSI part 1

CSI part 2

UL-SCH

FIG. 4b(4)

**Procedure 1**

Step 1A: If a sum of a first number of bits and a second number of bits is less than or equal to 2, and there is no CG-UCI, reserve an RE in $\Phi_1$ according to a rule

↓

Step 3: If there is CSI, map the CSI to the RE in $\Phi_1$ according to a rule, and update $\Phi_1$

↓

Step 4: If there is a UL-SCH, map the UL-SCH to the RE in $\Phi_1$ according to a rule

↓

Step 5A: Map HARQ feedback information and second information to the reserved RE in step 1A according to a rule

**Procedure 2**

Step 1B: If a sum of a first number of bits and a second number of bits is greater than 2, the first number of bits is less than or equal to 2, and there is no CG-UCI, reserve an RE in $\Phi_1$ according to a rule

↓

Step 2B: If there is second information, and the sum of the first number of bits and the second number of bits is greater than 2, map the second information to the RE in $\Phi_1$ according to a rule, and update $\Phi_1$ to $\Phi_1$ with the RE to which the second information is mapped being removed

↓

Step 3: If there is CSI, map the CSI to the RE in $\Phi_1$ according to a rule, and update $\Phi_1$

↓

Step 4: If there is a UL-SCH, map the UL-SCH to the RE in $\Phi_1$ according to a rule

↓

Step 5B: Map HARQ feedback information to the reserved RE in step 1B according to a rule

**Procedure 3**

Step 2: If a first number of bits is greater than 2, or if both HARQ feedback information and CG-UCI exist, map the HARQ feedback information and the CG-UCI (if any) to an RE in $\Phi_1$ according to a rule, and update $\Phi_1$ to $\Phi_1$ with the RE to which the HARQ feedback information and the CG-UCI (if any) are mapped being removed

↓

Step 2B: If there is second information, and a sum of the first number of bits and a second number of bits is greater than 2, map the second information to the RE in $\Phi_1$ according to a rule, and update $\Phi_1$ to $\Phi_1$ with the RE to which the second information is mapped being removed

↓

Step 3: If there is CSI, map the CSI to the RE in $\Phi_1$ according to a rule, and update $\Phi_1$ to $\Phi_1$ with the RE to which the CSI is mapped being removed

↓

Step 4: If there is a UL-SCH, map the UL-SCH to the RE in $\Phi_1$ according to a rule

**Procedure 4**

Step 2A: If there is CG-UCI, and there is no HARQ feedback information, map the CG-UCI to an RE in $\Phi_1$ according to a rule, and update $\Phi_1$ to $\Phi_1$ with the RE to which the CG-UCI is mapped being removed

↓

Step 2B: If there is second information, and a sum of a first number of bits and a second number of bits is greater than 2, map the second information to the RE in $\Phi_1$ according to a rule, and update $\Phi_1$ to $\Phi_1$ with the RE to which the second information is mapped being removed

↓

Step 3: If there is CSI, map the CSI to the RE in $\Phi_1$ according to a rule, and update $\Phi_1$ to $\Phi_1$ with the RE to which the CSI is mapped being removed

↓

Step 4: If there is a UL-SCH, map the UL-SCH to the RE in $\Phi_1$ according to a rule

**Procedure 5**

Step 2B: If there is second information, and a sum of a first number of bits and a second number of bits is greater than 2, map the second information to an RE in $\Phi_1$ according to a rule, and update $\Phi_1$ to $\Phi_1$ with the RE to which the second information is mapped being removed

↓

Step 3: If there is CSI, map the CSI to the RE in $\Phi_1$ according to a rule, and update $\Phi_1$ to $\Phi_1$ with the RE to which the CSI is mapped being removed

↓

Step 4: If there is a UL-SCH, map the UL-SCH to the RE in $\Phi_1$ according to a rule

FIG. 5

FIG. 6a(1)

FIG. 6a(2)

FIG. 6a(3)

FIG. 6a(4)

FIG. 6a(5)

FIG. 6a(6)

FIG. 6b(1)

FIG. 6b(2)

FIG. 6b(3)

FIG. 6b(4)

FIG. 6b(5)

FIG. 6b(6)

FIG. 6c(1)

Time
domain

Frequency
domain

DMRS

HARQ feedback
information

Second
information

FIG. 6c(2)

Time
domain

Frequency
domain

DMRS

HARQ feedback
information

Second
information

CSI part 1

FIG. 6c(3)

FIG. 6c(4)

FIG. 6c(5)

```
┌─────────────────────┐                    ┌───────────────────────────┐
│      Terminal       │                    │  Access network device    │
└─────────────────────┘                    └───────────────────────────┘
          │                                              │
┌─────────────────────┐                                  │
│ S701: Generate a third bit │                            │
│ sequence and a fourth bit  │                            │
│        sequence            │                            │
└─────────────────────┘                                  │
          │                                              │
          │   S702: Send third information by            │
          │   using a third resource of a PUSCH          │
          │ ──────────────────────────────────────────► │
          │                                              │
┌─────────────────────────┐                              │
│    S703: Map fourth      │                              │
│ information to a fourth   │                             │
│ resource of the PUSCH other│                            │
│   than the third resource │                             │
└─────────────────────────┘                              │
          │                                              │
          │   S704: Send the fourth information          │
          │    by using the fourth resource             │
          │ ──────────────────────────────────────────► │
          │                                              │
```

FIG. 7

| Procedure 1 | Procedure 2 | Procedure 3 | Procedure 4 |
|---|---|---|---|
| Step 1: If a third number of bits is less than or equal to 2 and there is no CG-UCI, reserve an RE in $\Phi_1$ according to a rule | Step 2: If a third number of bits is greater than 2, or if both HARQ feedback information and CG-UCI exist, map the HARQ feedback information and the CG-UCI (if any) to an RE in $\Phi_1$ according to a rule, and update $\Phi_1$ to $\Phi_1$ with the RE to which the HARQ feedback information and the CG-UCI (if any) are mapped being removed | Step 2A: If there is CG-UCI, and there is no HARQ feedback information, map the CG-UCI to an RE in $\Phi_1$ according to a rule, and update $\Phi_1$ to $\Phi_1$ with the RE to which the CG-UCI is mapped being removed | Step 2B: If there is fourth information, map the fourth information to an RE in $\Phi_1$ according to a rule, and update $\Phi_1$ to $\Phi_1$ with the RE to which the fourth information is mapped being removed |
| Step 2B: If there is fourth information, map the fourth information to the RE in $\Phi_1$ according to a rule, and update $\Phi_1$ to $\Phi_1$ with the RE to which the fourth information is mapped being removed | Step 2B: If there is fourth information, map the fourth information to the RE in $\Phi_1$ according to a rule, and update $\Phi_1$ to $\Phi_1$ with the RE to which the fourth information is mapped being removed | Step 2B: If there is fourth information, map the fourth information to the RE in $\Phi_1$ according to a rule, and update $\Phi_1$ to $\Phi_1$ with the RE to which the fourth information is mapped being removed | Step 3: If there is CSI, map the CSI to the RE in $\Phi_1$ according to a rule, and update $\Phi_1$ to $\Phi_1$ with the RE to which the CSI is mapped being removed |
| Step 3: If there is CSI, map the CSI to the RE in $\Phi_1$ according to a rule, and update $\Phi_1$ | Step 3: If there is CSI, map the CSI to the RE in $\Phi_1$ according to a rule, and update $\Phi_1$ | Step 3: If there is CSI, map the CSI to the RE in $\Phi_1$ according to a rule, and update $\Phi_1$ to $\Phi_1$ with the RE to which the CSI is mapped being removed | Step 4: If there is a UL-SCH, map the UL-SCH to the RE in $\Phi_1$ according to a rule |
| Step 4: If there is a UL-SCH, map the UL-SCH to the RE in $\Phi_1$ according to a rule | Step 4: If there is a UL-SCH, map the UL-SCH to the RE in $\Phi_1$ according to a rule | Step 4: If there is a UL-SCH, map the UL-SCH to the RE in $\Phi_1$ according to a rule | |
| Step 5: Map HARQ feedback information to the reserved RE in step 1 according to a rule | | | |

FIG. 8

FIG. 9(1)

FIG. 9(2)

FIG. 9(3)

FIG. 9(4)

FIG. 9(5)

FIG. 9(6)

**Procedure 1**

Step 1: If a number of bits of HARQ feedback information is less than or equal to 2, and there is no CG-UCI, reserve an RE in $\Phi_1$ according to a rule

Step 3: If there is CSI, map the CSI to the RE in $\Phi_1$ according to a rule, and update $\Phi_1$ to $\Phi_1$ with the RE to which the CSI is mapped being removed

Step 3A: If there is XR-UCI, map the XR-UCI to the RE in $\Phi_1$ according to a rule, and update $\Phi_1$ to $\Phi_1$ with the RE to which the CG-UCI is mapped being removed

Step 4: If there is a UL-SCH, map the UL-SCH to the RE in $\Phi_1$ according to a rule

Step 5: Map the HARQ feedback information to the reserved RE in step 1 according to a rule

**Procedure 2**

Step 2: If a number of bits of HARQ feedback information is greater than 2, or if both the HARQ feedback information and CG-UCI exist, map the HARQ feedback information and the CG-UCI (if any) to an RE in $\Phi_1$ according to a rule, and update $\Phi_1$ to $\Phi_1$ with the RE to which the HARQ feedback information and the CG-UCI (if any) are mapped being removed

Step 3: If there is CSI, map the CSI to the RE in $\Phi_1$ according to a rule, and update $\Phi_1$ to $\Phi_1$ with the RE to which the CSI is mapped being removed

Step 3A: If there is XR-UCI, map the XR-UCI to the RE in $\Phi_1$ according to a rule, and update $\Phi_1$ to $\Phi_1$ with the RE to which the CG-UCI is mapped being removed

Step 4: If there is a UL-SCH, map the UL-SCH to the RE in $\Phi_1$ according to a rule

**Procedure 3**

Step 2A: If there is CG-UCI, and there is no HARQ feedback information, map the CG-UCI to an RE in $\Phi_1$ according to a rule, and update $\Phi_1$ to $\Phi_1$ with the RE to which the CG-UCI is mapped being removed

Step 3: If there is CSI, map the CSI to the RE in $\Phi_1$ according to a rule, and update $\Phi_1$ to $\Phi_1$ with the RE to which the CSI is mapped being removed

Step 3A: If there is XR-UCI, map the XR-UCI to the RE in $\Phi_1$ according to a rule, and update $\Phi_1$ to $\Phi_1$ with the RE to which the CG-UCI is mapped being removed

Step 4: If there is a UL-SCH, map the UL-SCH to the RE in $\Phi_1$ according to a rule

FIG. 10

FIG. 11(1)

FIG. 11(2)

FIG. 11(3)

FIG. 11(4)

FIG. 11(5)

Time
domain

Frequency
domain

DMRS

Reserved
resource for
HARQ
feedback
information

HARQ
feedback
information

XR-UCI

CSI part 1

CSI part 2

UL-SCH

FIG. 11(6)

Interface
module

1201

Processing
module

1202

Communication
apparatus 1200

FIG. 12

Memory

1330

1310

1320

Processor

1330

Memory

Communication interface

1300

Memory

1330

FIG. 13

## INTERNATIONAL SEARCH REPORT

| International application No. |
| --- |
| **PCT/CN2024/084146** |

| A. | CLASSIFICATION OF SUBJECT MATTER |
| --- | --- |
| | H04W72/04(2023.01)i |

According to International Patent Classification (IPC) or to both national classification and IPC

| B. | FIELDS SEARCHED |
| --- | --- |

Minimum documentation searched (classification system followed by classification symbols)

    IPC:H04W

Documentation searched other than minimum documentation to the extent that such documents are included in the fields searched

Electronic data base consulted during the international search (name of data base and, where practicable, search terms used)

    CNTXT, ENTXTC, ENTXT, 3GPP, IEEE, CNKI: 混合自动重传请求, HARQ, 配置授权, CG, 资源, 时机, 使用, 占用, 指明, 指示, 表明, 比特数, hybrid aotomatic repeat request, configured grant, resource, opportunit+, us+, occup+, indicat+, bit+, number

| C. | DOCUMENTS CONSIDERED TO BE RELEVANT | |
| --- | --- | --- |
| Category* | Citation of document, with indication, where appropriate, of the relevant passages | Relevant to claim No. |
| Y | CN 111278129 A (VIVO COMMUNICATION TECHNOLOGY CO., LTD.) 12 June 2020 (2020-06-12) <br> description, paragraphs 0049-0128 | 5-6, 15-16, 21, 23-25 |
| Y | WO 2020239197 A1 (FRAUNHOFER GES FORSCHUNG) 03 December 2020 (2020-12-03) <br> description, paragraphs 0148-0150 | 5-6, 15-16, 21, 23-25 |
| A | WO 2023035909 A1 (HUAWEI TECHNOLOGIES CO., LTD.) 16 March 2023 (2023-03-16) <br> entire document | 1-27 |

☐ Further documents are listed in the continuation of Box C.     ☑ See patent family annex.

| | |
| --- | --- |
| *   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **13 May 2024** | **22 May 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/084146**

| Patent document cited in search report | | | Publication date (day/month/year) | Patent family member(s) | | | Publication date (day/month/year) |
|---|---|---|---|---|---|---|---|
| CN | 111278129 | A | 12 June 2020 | SG | 11202112022 | RA | 30 December 2021 |
| | | | | PT | 3965497 | T | 26 September 2023 |
| | | | | EP | 4262309 | A1 | 18 October 2023 |
| | | | | US | 2022053552 | A1 | 17 February 2022 |
| | | | | WO | 2020221205 | A1 | 05 November 2020 |
| | | | | HUE | 063598 | T2 | 28 January 2024 |
| | | | | ES | 2960014 | T3 | 29 February 2024 |
| | | | | EP | 3965497 | A1 | 09 March 2022 |
| | | | | EP | 3965497 | A4 | 22 June 2022 |
| | | | | EP | 3965497 | B1 | 06 September 2023 |
| | | | | JP | 2022532860 | A | 20 July 2022 |
| | | | | JP | 7259082 | B2 | 17 April 2023 |
| | | | | KR | 20220005539 | A | 13 January 2022 |
| WO | 2020239197 | A1 | 03 December 2020 | WO | 2020239246 | A1 | 03 December 2020 |
| WO | 2023035909 | A1 | 16 March 2023 | | None | | |

Form PCT/ISA/210 (patent family annex) (July 2022)

# EP 4 665 035 A1

**REFERENCES CITED IN THE DESCRIPTION**

**Patent documents cited in the description**

- CN 202310404249